# EUROPEAN PATENT SPECIFICATION

(11) **EP 4 546 034 B1**
(45) Date of publication and mention of the grant of the patent: **02.12.2026**
(21) Application number: 24208376.4
(22) Date of filing: 23.10.2024
(51) Int. Cl.: G02F 1/13, F21V 8/00, G02F 1/13357

(54) **VEHICLE DISPLAY DEVICE**
FAHRZEUGANZEIGEVORRICHTUNG
DISPOSITIF D'AFFICHAGE POUR VÉHICULE

(30) Priority: 24.10.2023 WO PCT/KR2023/016575
(43) Date of publication of application: 30.04.2025
(73) Proprietor: LG Electronics Inc., Yeongdeungpo-gu Seoul 07336 (KR)
(72) Inventor: KIM, Sangwon, 06772 Seoul (KR); JO, Juung, 06772 Seoul (KR); HONG, Selim, 06772 Seoul (KR); KIM, Dongkuk, 06772 Seoul (KR); KIM, Kyunglack, 06772 Seoul (KR); HWANG, Sangroc, 06772 Seoul (KR)
(74) Representative: Vossius & Partner Patentanwälte Rechtsanwälte mbB

(56) References cited:
- EP-A1- 4 160 086
- CN-B- 108 983 447
- US-A1- 2022 206 335
- US-B2- 10 712 593

## Description

### [Technical Field]

The present disclosure relates to a vehicle display device.

### [Background Art]

A vehicle is a means capable of transporting people or goods using kinetic energy. A representative example of the vehicle may be an automobile.

Development of systems for the convenience and safety of vehicle users has been actively underway. For example, the vehicle may provide functions such as active cruise control (ACC), smart parking assist system (SPAS), night vision (NV), head up display (HUD), around view monitor (AVM), and adaptive headlight system (AHS) for convenience of the users. For example, the vehicle may provide functions such as lane departure warning system (LDWS), lane keeping assist system (LKAS), and autonomous emergency braking (AEB) for safety of the users.

Meanwhile, there is a tendency that the vehicle is equipped with various sensors and electronic devices for convenience and safety of the users. In particular, the vehicle is equipped with one or more display devices capable of outputting information related to driving of the vehicle or content for convenience of the users. The display device is a device that has a function of displaying an image that may be viewed by the users. For example, the display device may include a liquid crystal display (LCD) using liquid crystals or an organic light-emitting diode (OLED) display using an OLED.

A driver or a passenger in the vehicle may view various content output through the display device. For example, the vehicle may output a dashboard screen including driving speed, driving distance, etc. through a display on a driver's seat side and output an OTT screen including content through a display on a passenger seat side.

However, various problems may arise due to the content output through the display device installed in the vehicle. For example, when the driver in the driver's seat looks at the display on the passenger seat side due to the content output through the display on the passenger seat side, the driver may momentarily lose focus on the front, which may result in a traffic accident. In addition, when content of a specific person in the vehicle is output through the display device in the vehicle, there is a possibility that private matter of the specific person may be exposed to others in the vehicle.

EP 4 160 086 A1, CN 108 983 447 B, US 10 712 593 B2 constitute relevant background art useful for understanding the invention, according to Rule 42(1) (b) EPC.

### [Disclosure]

### [Technical Problem]

It is an object of the present disclosure to solve the above-mentioned problems and other problems.

It is another object to provide a vehicle display device capable of adjusting a viewing angle of a display panel.

It is a further object to provide a vehicle display device capable of variously adjusting a display region in which a viewing angle is adjusted.

It is a further object to provide a vehicle display device capable of preventing private matter of a specific person in a vehicle from being exposed to others in the vehicle.

### [Technical Solution]

The present invention concerns a vehicle display device as defined in claim 1. The dependent claims define advantageous embodiments.

### [Advantageous effects]

The effects of the vehicle display device according to the present disclosure are as follows.

According to at least one embodiment of the present disclosure, it is possible to adjust a viewing angle of a display panel.

In addition, according to at least one embodiment of the present disclosure, it is possible to variously adjust a display region in which a viewing angle is adjusted.

In addition, according to at least one embodiment of the present disclosure, it is possible to prevent private matter of a specific person in a vehicle from being exposed to others in the vehicle.

Further scope of applicability of the present disclosure will become apparent from the detailed description below.

### [Description of Drawings]

FIG. 1 is a drawing illustrating an exterior of a vehicle according to one embodiment of the present disclosure.
FIG. 2 is a drawing of the vehicle viewed from various angles from the outside according to one embodiment of the present disclosure.
FIG. 3 and FIG. 4 are drawings illustrating an inside of the vehicle according to one embodiment of the present disclosure.
FIG. 5 and FIG. 6 are drawings for reference in description of an object according to one embodiment of the present disclosure.
FIG. 7 is a block diagram for reference in description of the vehicle according to one embodiment of the present disclosure.
FIG. 8 is a block diagram for reference in description of a configuration of a vehicle display device according to one embodiment of the present disclosure.
FIGs. 9 to 17 are drawings for reference in description of a backlight unit according to one embodiment of the present disclosure.
FIGs. 18 to 25 are drawings for reference in description of the backlight unit according to another embodiment of the present disclosure.
FIGs. 26 to 29B are drawings for reference in description of the vehicle display device according to one embodiment of the present disclosure.
FIG. 30 is a flowchart for an operation method of the vehicle display device according to one embodiment of the present disclosure.
FIGs. 31 to 36 are drawings for reference in description of an operation of the vehicle display device according to one embodiment of the present disclosure.

### [Mode for Invention]

Hereinafter, the present disclosure will be described in detail with reference to the drawings. In the drawings, to clearly and concisely describe the present disclosure, parts not related to the description are not illustrated, and the same drawing reference numerals are used for identical or extremely similar parts throughout the specification.

The suffixes "module" and "unit" used for components in the following description are given simply for convenience of writing this specification, and do not convey any particularly important meaning or role. Accordingly, the "module" and "unit" may be interchangeably used.

In this application, it should be understood that a term such as "include" or "have" is intended to designate that the features, numbers, steps, operations, components, parts, or combinations thereof described in the specification are present, and does not preclude the possibility of addition or presence of one or more other features, numbers, steps, operations, components, parts, or combinations thereof.

Further, in this specification, terms such as first, second, etc. may be used to describe various elements, but these elements are not limited by these terms. These terms are used only to distinguish one element from another.

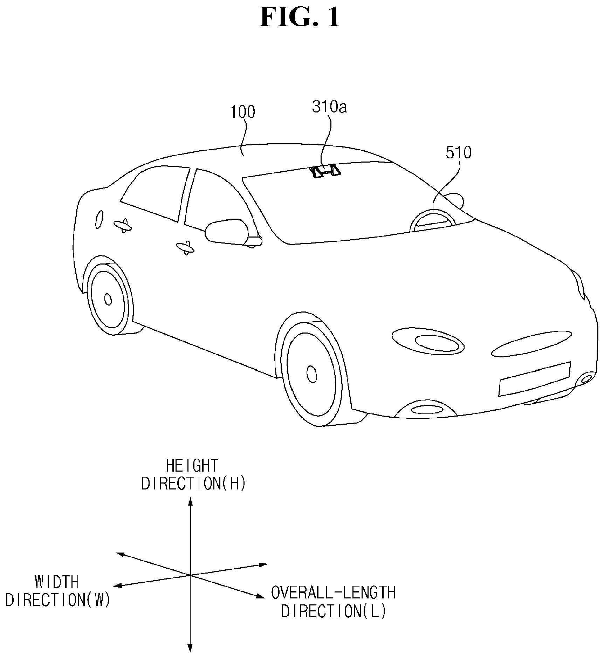

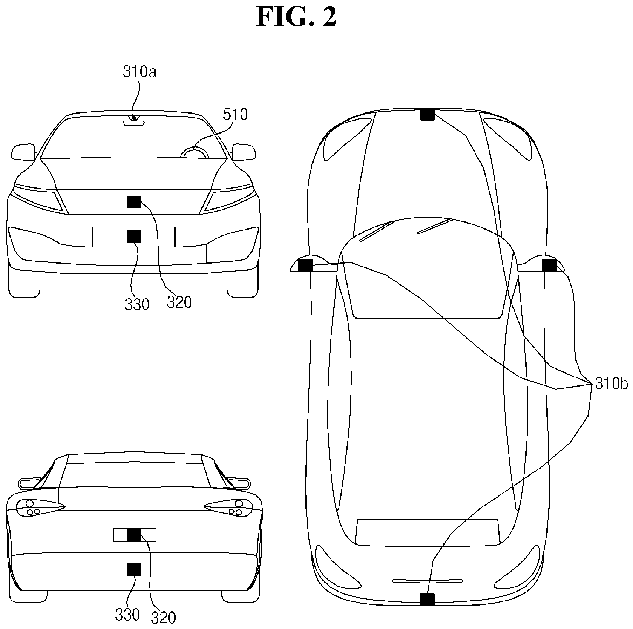

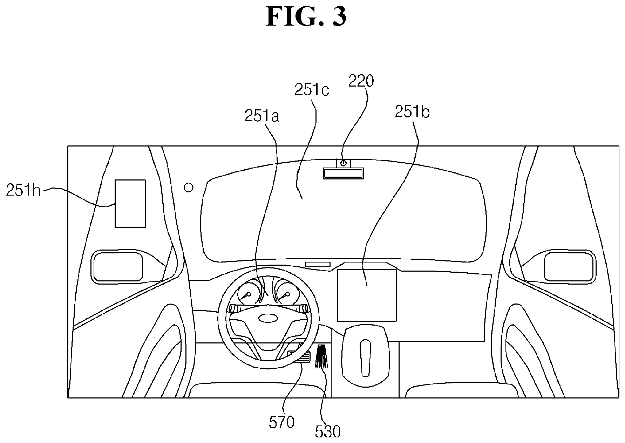

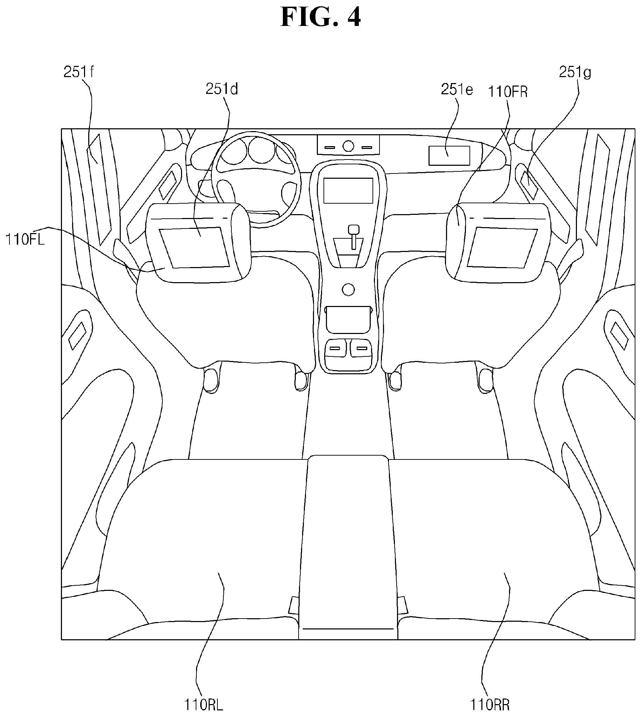

Referring to FIGs. 1 to 7, a vehicle 100 may include wheels that rotate by a power source and a steering input device 510 for adjusting a direction of travel of the vehicle 100.

The vehicle 100 may be an autonomous vehicle.

The vehicle 100 may be switched to an autonomous driving mode or a manual mode based on user input. For example, the vehicle 100 may be switched from the manual mode to the autonomous driving mode or from the autonomous driving mode to the manual mode based on user input received via a user interface device 200.

The vehicle 100 may be switched to the autonomous driving mode or the manual mode based on driving situation information. The driving situation information may include at least one of information on an object outside the vehicle, navigation information, or vehicle state information. For example, the vehicle 100 may be switched from the manual mode to the autonomous driving mode or from the autonomous driving mode to the manual mode based on driving situation information generated by an object detection device 300. For example, the vehicle 100 may be switched from the manual mode to the autonomous driving mode or from the autonomous driving mode to the manual mode based on driving situation information received through a communication device 400.

The vehicle 100 may be switched from the manual mode to the autonomous driving mode or from the autonomous driving mode to the manual mode based on information, data, and signals provided from an external device.

When the vehicle 100 is driven in the autonomous driving mode, the autonomous vehicle 100 may be driven based on an operation system 700. For example, the autonomous vehicle 100 may be driven based on information, data, or signals generated from a driving system 710, an exit system 740, and a parking system 750.

When the vehicle 100 is driven in the manual mode, the autonomous vehicle 100 may receive user input for driving through a driving operation device 500. The vehicle 100 may be driven based on user input received through the driving operation device 500.

An overall length refers to a length from a front to a rear of the vehicle 100, an overall width refers to a width of the vehicle 100, and an overall height refers to a length from a bottom of a wheel to a roof. In the following description, an overall length direction L may refer to a direction that serves as a reference for measuring the overall length of the vehicle 100, an overall width direction W may refer to a direction that serves as a reference for measuring the overall width of the vehicle 100, and an overall height direction H may refer to a direction that serves as a reference for measuring the overall height of the vehicle 100.

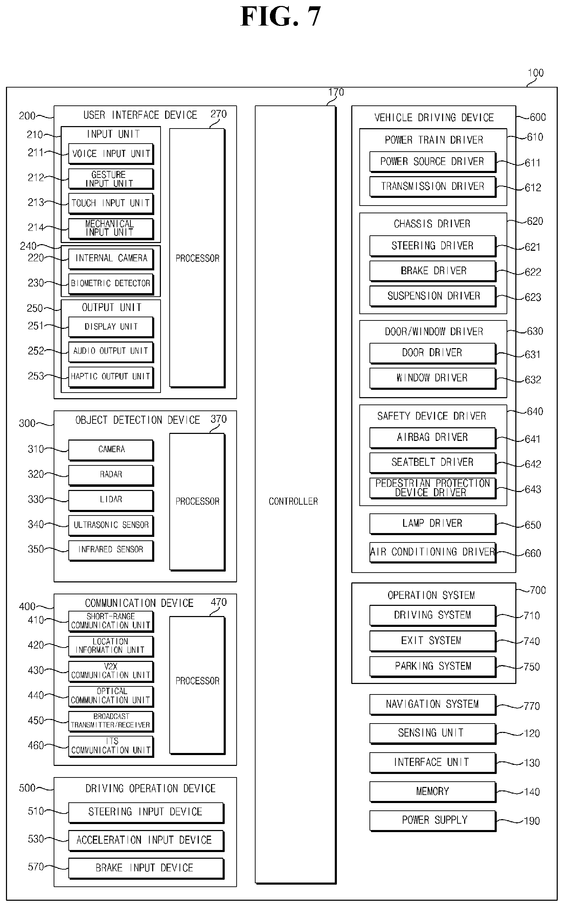

As illustrated in FIG. 7, the vehicle 100 may include the user interface device 200, the object detection device 300, the communication device 400, the driving operation device 500, a vehicle driving device 600, the operation system 700, a navigation system 770, a sensing unit 120, an interface unit 130, a memory 140, a controller 170, and/or a power supply 190. Depending on the embodiment, the vehicle 100 may include other components in addition to the components described herein, or may not include some of the components described.

The user interface device 200 is a device for communication between the vehicle 100 and a user. The user interface device 200 may receive user input and provide information generated in the vehicle 100 to the user. The vehicle 100 may implement a UI (User Interface) or UX (User Experience) through the user interface device 200.

The user interface device 200 may include an input unit 210, an internal camera 220, a biometric detector 230, an output unit 250, and/or a processor 270.

Depending on the embodiment, the user interface device 200 may include additional components other than the described components, or may not include some of the described components.

The input unit 210 is used to receive information from the user, and data collected by the input unit 210 may be analyzed by the processor 270 and processed as a control command of the user.

The input unit 210 may be disposed on the inside of the vehicle. For example, the input unit 210 may be disposed in a region of a steering wheel, a region of an instrument panel, in a region of a seat, in a region of each pillar, in a region of a door, in a region of a center console, in a region of a head lining, in a region of a sun visor, in a region of a windshield, in a region of a window, etc.

The input unit 210 may include a voice input unit 211, a gesture input unit 212, a touch input unit 213, and/or a mechanical input unit 214.

The voice input unit 211 may convert voice input of the user into an electrical signal. The converted electrical signal may be provided to the processor 270 or the controller 170. The voice input unit 211 may include one or more microphones.

The gesture input unit 212 may convert gesture input of the user into an electrical signal. The converted electrical signal may be provided to the processor 270 or the controller 170. The gesture input unit 212 may include at least one of an infrared sensor or an image sensor for detecting gesture input of the user. According to an embodiment, the gesture input unit 212 may detect three-dimensional gesture input of the user. To this end, the gesture input unit 212 may include a light output unit that outputs a plurality of infrared light rays or a plurality of image sensors. The gesture input unit 212 may detect three-dimensional gesture input of the user using a ToF (Time of Flight) method, a structured light method, or a disparity method.

The touch input unit 213 may convert touch input of the user into an electrical signal. The converted electrical signal may be provided to the processor 270 or the controller 170. The touch input unit 213 may include a touch sensor for detecting touch input of the user. According to an embodiment, the touch input unit 213 may be formed integrally with the display unit 251, thereby implementing a touchscreen. Such a touchscreen may provide an input interface together with an output interface between the vehicle 100 and the user.

The mechanical input unit 214 may include at least one of a button, a dome switch, a jog wheel, or a jog switch. An electrical signal generated by the mechanical input unit 214 may be provided to the processor 270 or the controller 170. The mechanical input unit 214 may be disposed on a steering wheel, a center fascia, a center console, a cockpit module, a door, etc.

The internal camera 220 may acquire an image of the inside of the vehicle. The processor 270 may detect a state of the user based on the image of the inside of the vehicle. The processor 270 may acquire gaze information of the user from the image of the inside of the vehicle. The processor 270 may detect gesture of the user from the image of the inside of the vehicle.

The biometric detector 230 may acquire biometric information of the user. The biometric detector 230 may include a sensor capable of acquiring the biometric information of the user. The biometric detector 230 may acquire fingerprint information, heartbeat information, etc. of the user using the sensor. The biometric information may be used for user authentication.

The output unit 250 is used to generate output related to vision, hearing, or tactile sensations. The output unit 250 may include at least one of a display unit 251, an audio output unit 252, and a haptic output unit 253.

The display unit 251 may display graphic objects corresponding to various pieces of information. The display unit 251 may include at least one of a liquid crystal display (LCD), a thin film transistor-liquid crystal display (TFT LCD), an organic light-emitting diode (OLED), a flexible display, a 3D display, or an e-ink display. The display unit 251 may be referred to as a vehicle display device 251.

The display unit 251 may implement a touchscreen by forming a mutual layer structure with the touch input unit 213 or by being formed as an integral part.

The display unit 251 may be implemented as a HUD (head up display). When the display unit 251 is implemented as the HUD, the display unit 251 may be equipped with a projection module to output information through an image projected onto the windshield or the window.

The display unit 251 may include a transparent display. The transparent display may be attached to the windshield or the window. The transparent display may have predetermined transparency and display a predetermined screen. In order to have transparency, the transparent display may include at least one of a transparent TFEL (Thin Film Electroluminescent), a transparent OLED (Organic Light-Emitting Diode), a transparent LCD (Liquid Crystal Display), a transparent display, or a transparent LED (Light-Emitting Diode) display. The transparency of the transparent display may be adjusted.

Meanwhile, the user interface device 200 may include a plurality of display units 251a to 251g. The display unit 251 may be disposed in a region of a steering wheel, a region 251a, 251b, and 251e of an instrument panel, in a region 251d of a seat, in a region 251f of each pillar, in a region 251g of a door, in a region of a center console, in a region of a head lining, or in a region of a sun visor, or may be implemented in a region 251c of a windshield or in a region 251h of a window.

The audio output unit 252 converts an electric signal provided from the processor 270 or the controller 170 into an audio signal and outputs the audio signal. To this end, the audio output unit 252 may include one or more speakers.

The haptic output unit 253 generates tactile output. For example, the haptic output unit 253 may operate by vibrating a steering wheel, a seatbelt, seats 110FL, 110FR, 110RL, and 110RR, etc., so that the user may recognize the output.

The processor 270 may control an overall operation of each unit of the user interface device 200.

According to an embodiment, the user interface device 200 may include a plurality of processors 270 or may not include the processor 270. When the user interface device 200 does not include the processor 270, the user interface device 200 may be operated under the control of a processor of another device or the controller 170 inside the vehicle 100.

Meanwhile, the user interface device 200 may be referred to as a vehicle display device. The user interface device 200 may be operated under the control of the controller 170.

The object detection device 300 is a device for detecting an object located outside the vehicle 100. The object detection device 300 may generate object information based on sensing data. The object information may include information on the presence or absence of an object, location information of the object, distance information between the vehicle 100 and the object, and relative speed information between the vehicle 100 and the object. The object may be various objects related to operation of the vehicle 100.

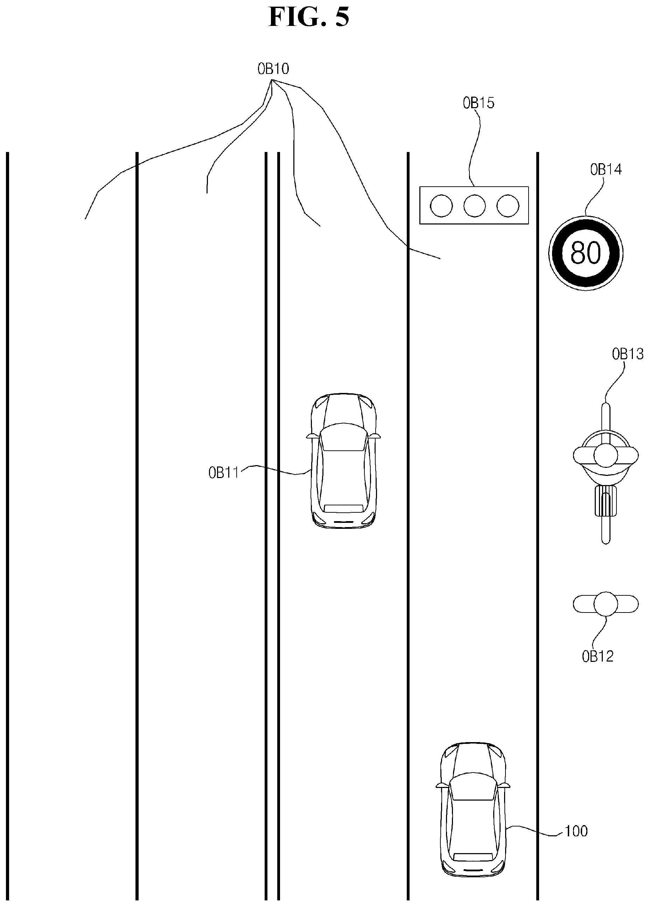

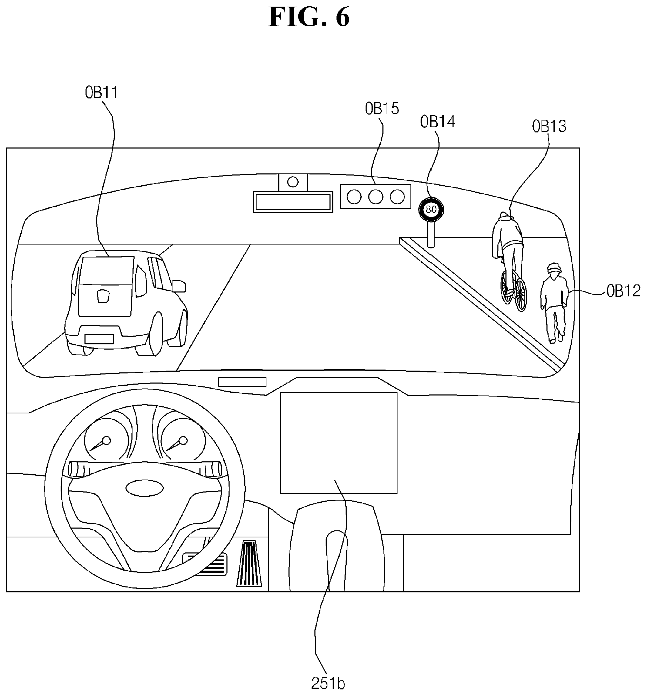

Referring to FIGs. 5 and 6, objects O may include a lane OB10, another vehicle OB11, a pedestrian OB12, a two-wheeled vehicle OB13, traffic signals OB14 and OB15, a light, a road, a structure, a speed bump, terrain, an animal, etc.

The lane OB10 may be a driving lane, a lane next to the driving lane, or a lane in which an opposing vehicle is driving. The lane OB10 may be a concept that includes left and right lines forming the lane. The lane may be a concept that includes an intersection.

The other vehicle OB11 may be a vehicle driving around the vehicle 100. The other vehicle may be a vehicle located within a predetermined distance from the vehicle 100. For example, the other vehicle OB11 may be a vehicle preceding or following the vehicle 100.

The pedestrian OB12 may be a person located around the vehicle 100. The pedestrian OB12 may be a person located within a predetermined distance from the vehicle 100. For example, the pedestrian OB12 may be a person located on a sidewalk or a roadway.

The two-wheeled vehicle OB13 may refer to a vehicle that is located around the vehicle 100 and moves using two wheels. The two-wheeled vehicle OB13 may be a vehicle having two wheels located within a predetermined distance from the vehicle 100. For example, the two-wheeled vehicle OB13 may be a motorcycle or a bicycle located on a sidewalk or a roadway.

The traffic signals may include a traffic light OB15, a traffic sign OB14, and a pattern or text painted on a road surface.

The light may be light generated from a lamp installed in another vehicle. The light may be light generated from a streetlight. The light may be sunlight.

The road may include the road surface, a curve, a slope such as an uphill or a downhill, etc.

The structure may be an object located around a roadway and fixed to the ground. For example, the structure may include a streetlight, a street tree, a building, a utility pole, a traffic light, a bridge, a curb, and a wall.

The terrain may include a mountain, a hill, etc.

Meanwhile, objects may be classified into a moving object and a stationary object. For example, the moving object may be a concept including another moving vehicle and a moving pedestrian. For example, the stationary object may be a concept including a traffic signal, a road, a structure, another stationary vehicle, and a stationary pedestrian.

The object detection device 300 may include a camera 310, a radar 320, a LiDAR 330, an ultrasonic sensor 340, an infrared sensor 350, and/or a processor 370.

Depending on the embodiment, the object detection device 300 may include additional components other than the described components, or may not include some of the described components.

The camera 310 may be located at an appropriate location outside the vehicle to acquire an image of the outside of the vehicle. The camera 310 may be a mono camera, a stereo camera 310a, an AVM (Around View Monitoring) camera 310b, or a 360-degree camera.

The camera 310 may acquire position information of the object, information on a distance to the object, or information on a relative speed with respect to the object by using various image processing algorithms.

For example, the camera 310 may acquire distance information and relative speed information with respect to the object based on change in an object size over time from the acquired image.

For example, the camera 310 may acquire distance information and relative speed information with respect to the object through a pin hole model, road profiling, etc.

For example, the camera 310 may acquire distance information and relative speed information with respect to the object based on disparity information from a stereo image acquired from the stereo camera 310a.

For example, the camera 310 may be disposed inside the vehicle, close to the front windshield, to acquire an image of the front of the vehicle. Alternatively, the camera 310 may be disposed around a front bumper or radiator grill.

For example, the camera 310 may be disposed inside the vehicle, close to a rear glass, to acquire an image of the rear of the vehicle. Alternatively, the camera 310 may be disposed around a rear bumper, trunk, or tailgate.

For example, the camera 310 may be disposed close to at least one of side windows inside the vehicle to acquire an image of the side of the vehicle. Alternatively, the camera 310 may be disposed around a side mirror, a fender, or a door.

The camera 310 may provide the acquired image to the processor 370.

The radar 320 may include an electromagnetic wave transmitter and receiver. The radar 320 may be implemented using a pulse radar method or a continuous wave radar method based on a principle of radio wave emission. In the continuous wave radar method, the radar 320 may be implemented using an FMCW (Frequency Modulated Continuous Wave) method or an FSK (Frequency Shift Keying) method depending on the signal waveform.

The radar 320 may detect the object through electromagnetic waves based on a ToF method or a phase-shift method, and may detect a location of the detected object, a distance to the detected object, and a relative speed with respect to the detected object.

The radar 320 may be disposed at an appropriate location outside the vehicle to detect the object located at the front, the rear, or the side of the vehicle.

The LiDAR 330 may include a laser transmitter and receiver. The LiDAR 330 may be implemented using the ToF method or the phase-shift method.

The LiDAR 330 may be implemented in a driven or non-driven type.

When implemented as the driven type, the LiDAR 330 is rotated by a motor and may detect the object around the vehicle 100.

When implemented in the non-driven type, the LiDAR 330 may detect an object located within a predetermined range based on the vehicle 100 by means of optical steering. The vehicle 100 may include a plurality of non-driven LiDAR 330.

The LiDAR 330 may detect an object based on the ToF method or the phase-shift method through laser light, and may detect a location of the detected object, a distance to the detected object, and a relative speed with respect to the detected object.

The LiDAR 330 may be disposed at an appropriate location outside the vehicle to detect the object located at the front, the rear, or the side of the vehicle.

The ultrasonic sensor 340 may include an ultrasonic transmitter and receiver. The ultrasonic sensor 340 may detect an object based on ultrasonic waves, and may detect a location of the detected object, a distance to the detected object, and a relative speed with respect to the detected object.

The ultrasonic sensor 340 may be disposed at an appropriate location outside the vehicle to detect the object located at the front, the rear, or the side of the vehicle.

The infrared sensor 350 may include an infrared transmitter and a receiver. The infrared sensor 340 may detect an object based on infrared light, and may detect a location of the detected object, a distance to the detected object, and a relative speed with respect to the detected object.

The infrared sensor 350 may be disposed at an appropriate location outside the vehicle to detect the object located at the front, the rear, or the side of the vehicle.

The processor 370 may control an overall operation of each unit of the object detection device 300.

The processor 370 may detect or classify an object by comparing data sensed by the camera 310, the radar 320, the LiDAR 330, the ultrasonic sensor 340, and the infrared sensor 350 with previously stored data.

The processor 370 may detect and track the object based on the acquired image. The processor 370 may perform operations such as calculating a distance to the object and calculating a relative speed with respect to the object through an image processing algorithm.

For example, the processor 370 may acquire distance information and relative speed information with respect to the object based on change in the object size over time in the acquired image.

For example, the processor 370 may acquire distance information and relative speed information with respect to the object through a pin hole model, road profiling, etc.

For example, the processor 370 may acquire distance information and relative speed information with respect to the object based on disparity information from a stereo image acquired by the stereo camera 310a.

The processor 370 may detect and track the object based on reflected electromagnetic waves returning after transmitted electromagnetic waves are reflected by the object. The processor 370 may perform operations such as calculating the distance to the object and calculating the relative speed with respect to the object based on the electromagnetic waves.

The processor 370 may detect and track the object based on reflected laser light returning after a transmitted laser is reflected from the object. The processor 370 may perform operations such as calculating a distance to the object and calculating a relative speed with respect to the object based on the laser light.

The processor 370 may detect and track the object based on reflected ultrasonic waves returning after transmitted ultrasonic waves are reflected by the object. The processor 370 may perform operations such as calculating a distance to the object and calculating a relative speed with respect to the object based on ultrasonic waves.

The processor 370 may detect and track the object based on reflected infrared light returning after transmitted infrared light is reflected from the object. The processor 370 may perform operations such as calculating a distance to the object and calculating a relative speed with respect to the object based on the infrared light.

Depending on the embodiment, the object detection device 300 may include a plurality of processors 370 or may not include the processor 370. For example, each of the camera 310, the radar 320, the LiDAR 330, the ultrasonic sensor 340, and the infrared sensor 350 may individually include a processor.

When the processor 370 is not included in the object detection device 300, the object detection device 300 may be operated under the control of a processor of a device in the vehicle 100 or the controller 170.

The object detection device 300 may be operated under the control of the controller 170.

The communication device 400 is a device for performing communication with an external device. Here, the external device may be another vehicle, a mobile terminal, or a server.

The communication device 400 may include at least one of a transmit antenna, a receive antenna, an RF (Radio Frequency) circuit capable of implementing various communication protocols, or an RF element to perform communication.

The communication device 400 may include a short-range communication unit 410, a location information unit 420, a V2X communication unit 430, an optical communication unit 440, a broadcast transmitter/receiver 450, and/or a processor 470.

Depending on the embodiment, the communication device 400 may include additional components other than the described components, or may not include some of the described components.

The short-range communication unit 410 is a unit for short-range communication. The short-range communication unit 410 may support short-range communication using at least one of Bluetooth, RFID (Radio Frequency Identification), IrDA (Infrared Data Association), UWB (Ultra-Wideband), ZigBee, NFC (Near Field Communication), Wi-Fi, Wi-Fi Direct, or Wireless USB (Wireless Universal Serial Bus) technology.

The short-range communication unit 410 may form a short-range wireless communication network (Wireless Area Network) to perform short-range communication between the vehicle 100 and at least one external device.

The location information unit 420 is a unit for acquiring location information of the vehicle 100. For example, the location information unit 420 may include a GPS (Global Positioning System) module or a DGPS (Differential Global Positioning System) module.

The V2X communication unit 430 is a unit for performing wireless communication with a server (V2I: Vehicle to Infrastructure), another vehicle (V2V: Vehicle to Vehicle), or a pedestrian (V2P: Vehicle to Pedestrian). The V2X communication unit 430 may include an RF circuit capable of implementing protocols for communication with infrastructure (V2I), communication between vehicles (V2V), and communication with pedestrians (V2P).

The optical communication unit 440 is a unit for communicating with an external device through light. The optical communication unit 440 may include an optical transmitter that converts an electrical signal into an optical signal and transmits the signal to the outside, and an optical receiver that converts a received optical signal into an electrical signal.

According to an embodiment, the optical transmitter may be formed integrally with a lamp included in the vehicle 100.

The broadcast transmitter/receiver 450 is a unit for receiving a broadcast signal from an external broadcast management server through a broadcast channel, or transmitting a broadcast signal to the broadcast management server. The broadcast channel may include a satellite channel and a terrestrial channel. The broadcast signal may include a TV broadcast signal, a radio broadcast signal, and a data broadcast signal.

The communication device 400 may further include an ITS (Intelligent Transport Systems) communication unit 460.

The ITS communication unit 460 may exchange information, data, or signals with a traffic system. The ITS communication unit 460 may provide information and data acquired from the traffic system. The ITS communication unit 460 may receive information, data, or signals from the traffic system. For example, the ITS communication unit 460 may receive road traffic information from the traffic system and provide the road traffic information to the controller 170. For example, the ITS communication unit 460 may receive a control signal from the traffic system and provide the control signal to the controller 170 or a processor installed in the vehicle 100.

The processor 470 may control an overall operation of each unit of the communication device 400.

Depending on the embodiment, the communication device 400 may include a plurality of processors 470 or may not include the processor 470.

When the processor 470 is not included in the communication device 400, the communication device 400 may be operated under the control of a processor of another device in the vehicle 100 or the controller 170.

Meanwhile, the communication device 400 may implement the vehicle display device together with the user interface device 200. In this case, the vehicle display device may be referred to as a telematics device or an AVN (Audio Video Navigation) device.

The communication device 400 may be operated under the control of the controller 170.

The driving operation device 500 is a device that receives user input for driving.

In the manual mode, the vehicle 100 may be driven based on a signal provided by the driving operation device 500.

The driving operation device 500 may include a steering input device 510, an acceleration input device 530, and/or a brake input device 570.

The steering input device 510 may receive input of a direction of travel of the vehicle 100 from the user. The steering input device 510 is preferably formed in a wheel shape so that steering input may be performed by rotation thereof. According to an embodiment, the steering input device may take the form of a touchscreen, a touch pad, or a button.

The acceleration input device 530 may receive input for acceleration of the vehicle 100 from the user. The brake input device 570 may receive input for deceleration of the vehicle 100 from the user. It is preferable that the acceleration input device 530 and the brake input device 570 are each formed in a pedal form. According to an embodiment, the acceleration input device or the brake input device may take the form of a touchscreen, a touch pad, or a button.

The driving operation device 500 may be operated under the control of the controller 170.

The vehicle driving device 600 is a device that electrically controls driving of various devices in the vehicle 100.

The vehicle driving device 600 may include a power train driver 610, a chassis driver 620, a door/window driver 630, a safety device driver 640, a lamp driver 650, and/or an air conditioning driver 660.

Depending on the embodiment, the vehicle driving device 600 may include additional components other than the described components, or may not include some of the described components.

Meanwhile, the vehicle driving device 600 may include a processor. Each unit of the vehicle driving device 600 may individually include a processor.

The power train driver 610 may control an operation of a power train device.

The power train driver 610 may include a power source driver 611 and/or a transmission driver 612.

The power source driver 611 may perform control on the power source of the vehicle 100.

For example, when a fossil fuel-based engine is the power source, the power source driver 611 may perform electronic control on the engine. Accordingly, the output torque of the engine, etc. may be controlled. The power source driver 611 may adjust the engine output torque according to the control of the controller 170.

For example, when an electric energy-based motor is the power source, the power source driver 611 may perform control on the motor. The power source driver 611 may adjust a rotation speed, torque, etc. of the motor according to the control of the controller 170.

The transmission driver 612 may perform control on the transmission.

The transmission driver 612 may adjust a state of the transmission. The transmission driver 612 may adjust a state of the transmission to a forward (D), reverse (R), neutral (N), or parking (P) state.

Meanwhile, when an engine is the power source, the transmission driver 612 may adjust a gear engagement state to the forward (D) state.

The chassis driver 620 may control an operation of a chassis device.

The chassis driver 620 may include a steering driver 621, a brake driver 622, and/or a suspension driver 623.

The steering driver 621 may perform electronic control on a steering apparatus in the vehicle 100. The steering driver 621 may change the direction of travel of the vehicle.

The brake driver 622 may perform electronic control on a brake apparatus in the vehicle 100. For example, a speed of the vehicle 100 may be reduced by controlling an operation of a brake placed on a wheel.

Meanwhile, the brake driver 622 may individually control each of a plurality of brakes. The brake driver 622 may differently control braking forces applied to the plurality of wheels.

The suspension driver 623 may perform electronic control on a suspension apparatus in the vehicle 100. For example, when there is a curve on the road surface, the suspension driver 623 may control the suspension apparatus, thereby reducing vibration of the vehicle 100.

Meanwhile, the suspension driver 623 may individually control each of a plurality of suspensions.

The door/window driver 630 may perform electronic control on a door apparatus or a window apparatus in the vehicle 100.

The door/window driver 630 may include a door driver 631 and/or a window driver 632.

The door driver 631 may perform control on a door device. The door driver 631 may control opening and closing of a plurality of doors included in the vehicle 100. The door driver 631 may control opening or closing of a trunk or a tail gate. The door driver 631 may control opening or closing of a sunroof.

The window driver 632 may perform electronic control on the window apparatus. It is possible to control opening or closing of a plurality of windows included in the vehicle 100.

The safety device driver 640 may perform electronic control on various safety apparatuses in the vehicle 100.

The safety device driver 640 may include an airbag driver 641, a seatbelt driver 642, and/or a pedestrian protection device driver 643.

The airbag driver 641 may perform electronic control on an airbag apparatus in the vehicle 100. For example, the airbag driver 641 may perform a control operation so that an airbag is deployed when danger is detected.

The seatbelt driver 642 may perform electronic control on a seatbelt apparatus in the vehicle 100. For example, the seatbelt driver 642 may perform a control operation so that the passenger is secured to one of the seats 110FL, 110FR, 110RL, and 110RR using a seatbelt when danger is detected.

The pedestrian protection device driver 643 may perform electronic control on a hood lift and a pedestrian airbag. For example, the pedestrian protection device driver 643 may perform a control operation so that the hood lift is raised and the pedestrian airbag is deployed when a collision with a pedestrian is detected.

The lamp driver 650 may perform electronic control on various lamp apparatuses in the vehicle 100.

The air conditioning driver 660 may perform electronic control on an air conditioner in the vehicle 100. For example, the air conditioning driver 660 may perform a control operation so that the air conditioner operates to supply cool air into the vehicle when a temperature inside the vehicle is high.

The vehicle driving device 600 may include a processor. Each unit of the vehicle driving device 600 may individually include a processor.

The vehicle driving device 600 may be operated under the control of the controller 170.

The operation system 700 is a system that controls various operations of the vehicle 100. The operation system 700 may be executed in the autonomous driving mode.

The operation system 700 may include the driving system 710, the exit system 740, and/or the parking system 750.

Depending on the embodiment, the operation system 700 may include additional components other than the described components, or may not include some of the described components.

Meanwhile, the operation system 700 may include a processor. Each unit of the operation system 700 may individually include a processor.

Meanwhile, depending on the embodiment, when the operation system 700 is implemented in software, the operation system 700 may be a sub-concept of the controller 170.

Meanwhile, depending on the embodiment, the operation system 700 may be a concept including at least one of the user interface device 270, the object detection device 300, the communication device 400, the driving operation device 500, the vehicle driving device 600, the navigation system 770, the sensing unit 120, or the controller 170.

The driving system 710 may drive the vehicle 100.

The driving system 710 may receive navigation information from the navigation system 770 and provide a control signal to the vehicle driving device 600 to drive the vehicle 100.

The driving system 710 may receive object information from the object detection device 300 and provide a control signal to the vehicle driving device 600 to drive the vehicle 100.

The driving system 710 may receive a signal from an external device through the communication device 400 and provide a control signal to the vehicle driving device 600 to drive the vehicle 100.

The driving system 710 includes at least one of the user interface device 270, the object detection device 300, the communication device 400, the driving operation device 500, the vehicle driving device 600, the navigation system 770, the sensing unit 120, or the controller 170, and may have a concept of a system driving the vehicle 100.

This driving system 710 may be referred to as a vehicle driving control device.

The exit system 740 may perform exit of the vehicle 100.

The exit system 740 may receive navigation information from the navigation system 770 and provide a control signal to the vehicle driving device 600 to perform exit of the vehicle 100.

The exit system 740 may receive object information from the object detection device 300 and provide a control signal to the vehicle driving device 600 to perform exit of the vehicle 100.

The exit system 740 may receive a signal from an external device through the communication device 400 and provide a control signal to the vehicle driving device 600 to perform exit of the vehicle 100.

The exit system 740 includes at least one of the user interface device 270, the object detection device 300, the communication device 400, the driving operation device 500, the vehicle driving device 600, the navigation system 770, the sensing unit 120, or the controller 170, and may have a concept of a system performing exit of the vehicle 100.

This exit system 740 may be referred to as a vehicle exit control device.

The parking system 750 may perform parking of the vehicle 100.

The parking system 750 may receive navigation information from the navigation system 770 and provide a control signal to the vehicle driving device 600 to perform parking of the vehicle 100.

The parking system 750 may receive object information from the object detection device 300 and provide a control signal to the vehicle driving device 600 to perform parking of the vehicle 100.

The parking system 750 may receive a signal from an external device through the communication device 400 and provide a control signal to the vehicle driving device 600 to perform parking of the vehicle 100.

The parking system 750 includes at least one of the user interface device 270, the object detection device 300, the communication device 400, the driving operation device 500, the vehicle driving device 600, the navigation system 770, the sensing unit 120, or the controller 170, and may have a concept of a system performing parking of the vehicle 100.

This parking system 750 may be referred to as a vehicle parking control device.

The navigation system 770 may provide navigation information. The navigation information may include at least one of map information, set destination information, route information according to destination setting, information on various objects on a route, lane information, or current location information of the vehicle.

The navigation system 770 may include a memory and a processor. The memory may store navigation information. The processor may control an operation of the navigation system 770.

Depending on the embodiment, the navigation system 770 may receive information from an external device via the communication device 400 and update previously stored information.

Depending on the embodiment, the navigation system 770 may be classified as a sub-component of the user interface device 200.

The sensing unit 120 may sense the state of the vehicle. The sensing unit 120 may include an IMU (inertial measurement unit) sensor, a collision sensor, a wheel sensor, a speed sensor, an inclination sensor, a weight detection sensor, a heading sensor, a position module, a vehicle forward/backward sensor, a battery sensor, a fuel sensor, a tire sensor, a steering sensor based on steering wheel rotation, a vehicle internal temperature sensor, a vehicle internal humidity sensor, an ultrasonic sensor, an illuminance sensor, an accelerator pedal position sensor, a brake pedal position sensor, etc.

Meanwhile, the IMU sensor may include one or more of an acceleration sensor, a gyro sensor, and a magnetic sensor.

The sensing unit 120 may acquire sensing signals for vehicle attitude information, vehicle motion information, vehicle yaw information, vehicle roll information, vehicle pitch information, vehicle collision information, vehicle direction information, vehicle location information (GPS information), vehicle angle information, vehicle speed information, vehicle acceleration information, vehicle inclination information, vehicle forward/backward information, battery information, fuel information, tire information, vehicle lamp information, vehicle internal temperature information, vehicle internal humidity information, steering wheel rotation angle, vehicle external illuminance, pressure applied to an accelerator pedal, pressure applied to a brake pedal, etc.

In addition, the sensing unit 120 may further include an accelerator pedal sensor, a pressure sensor, an engine speed sensor, an air flow sensor (AFS), an intake temperature sensor (ATS), a water temperature sensor (WTS), a throttle position sensor (TPS), a TDC sensor, a crank angle sensor (CAS), etc.

The sensing unit 120 may generate vehicle state information based on sensing data. The vehicle state information may be information generated based on data detected by various sensors installed inside the vehicle.

For example, the vehicle state information may include vehicle attitude information, vehicle speed information, vehicle inclination information, vehicle weight information, vehicle direction information, vehicle battery information, vehicle fuel information, vehicle tire pressure information, vehicle steering information, vehicle internal temperature information, vehicle internal humidity information, pedal position information, vehicle engine temperature information, etc.

The interface unit 130 may serve as a passage for various types of external devices connected to the vehicle 100. For example, the interface unit 130 may be equipped with a port connectable to a mobile terminal, and may be connected to a mobile terminal through the port. In this case, the interface unit 130 may exchange data with the mobile terminal.

Meanwhile, the interface unit 130 may serve as a passage for supplying electric energy to a connected mobile terminal. When the mobile terminal is electrically connected to the interface unit 130, the interface unit 130 may provide electric energy supplied from the power supply 190 to the mobile terminal under the control of the controller 170.

The memory 140 is electrically connected to the controller 170. The memory 140 may store basic data for a unit, control data for controlling an operation of the unit, input/output data, etc. The memory 140 may be various storage devices such as a ROM, a RAM, an EPROM, a flash drive, a hard drive, etc. in terms of hardware. The memory 140 may store various data for an overall operation of the vehicle 100, such as a program for processing or controlling the controller 170.

Depending on the embodiment, the memory 140 may be formed integrally with the controller 170 or implemented as a sub-component of the controller 170.

The controller 170 may control an overall operation of each unit in the vehicle 100. The controller 170 may be referred to as an ECU (Electronic Control Unit).

The power supply 190 may supply power required for an operation of each component under the control of the controller 170. In particular, the power supply 190 may receive power from a battery inside the vehicle, etc.

One or more processors and the controller 170 included in the vehicle 100 may be implemented using at least one of ASICs (application specific integrated circuits), DSPs (digital signal processors), DSPDs (digital signal processing devices), PLDs (programmable logic devices), FPGAs (field programmable gate arrays), processors, controllers, microcontrollers, microprocessors, or other electrical units for performing functions.

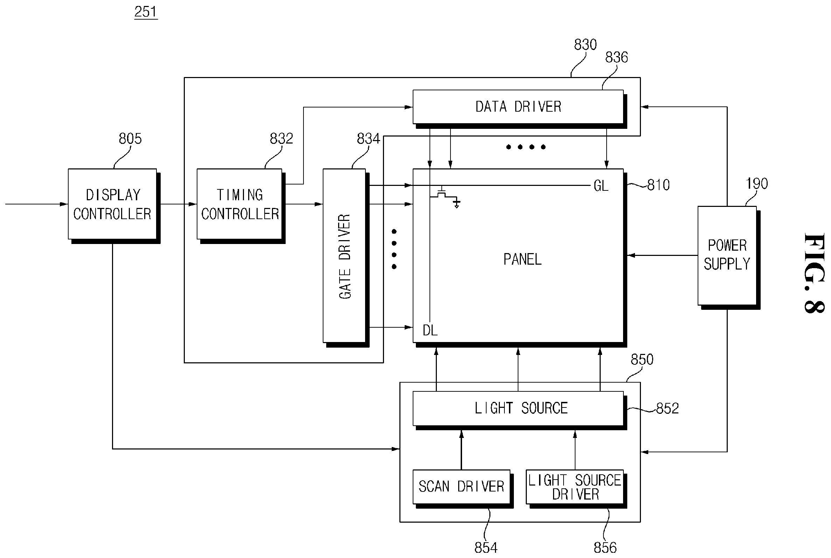

FIG. 8 is a block diagram for reference in description of a configuration of the vehicle display device according to one embodiment of the present disclosure.

Referring to FIG. 8, the vehicle display device 251 may output a predetermined image based on an image signal. For example, the vehicle display device 251 may output a graphic object representing instrument panel information of the vehicle 100, various images, etc. based on an image signal.

The vehicle display device 251 may include a display controller 805, a display panel 810, a panel driver 830, and/or a backlight unit 850.

The display controller 805 can receive an image signal from the controller 170. The display controller 805 may process the image signal. The display controller 805 may be equipped with a decoder, a scaler, a formatter, etc. to process the image signal. The display controller 805 may be included in the controller 170. The display controller 805 may be included in the processor 270. The display controller 805 may be provided separately from the controller 170 and/or the processor 270.

According to one embodiment, the display controller 805 may include a demultiplexer that demultiplexes an input stream. The demultiplexer may separate the input stream into image, voice, and/or data signals. The decoder may decode the demultiplexed image signal. The scaler may perform scaling so that the resolution of the decoded image signal may be output to the display panel 810.

According to one embodiment, the display controller 805 may include a frame rate converter (FRC) that converts a frame rate of an input image. Meanwhile, the frame rate converter may output the image as is without separate frame rate conversion.

The formatter may change a format of an input image signal into an image signal for display on the display panel 810 and output the signal.

The demultiplexer, the decoder, the scaler, the frame rate converter, and/or the formatter may each be provided as a separate entity or may be separately provided as one module without being provided in the display controller 805.

The display panel 810 may include a plurality of pixels P. The plurality of pixels P may be connected to a plurality of gate lines GL and data lines DL arranged to intersect in a matrix form. A plurality of thin film transistors TFTs may be arranged at intersections of the plurality of gate lines GL and data lines DL. The plurality of pixels P may be formed at the intersections of the plurality of data lines DL and the plurality of gate lines GL. Each of the plurality of pixels P may be connected to a data line and a gate line.

When the vehicle display device 251 is a liquid crystal display (LCD), the plurality of pixels may each include a liquid crystal layer. When the vehicle display device 251 is an OLED display, the plurality of pixels may each include an organic light emitting diode OLED.

The display panel 810 may include a first substrate on which a driving element such as a thin film transistor (TFT) and a pixel electrode connected thereto are formed, a second substrate having a common electrode, and/or a liquid crystal layer formed between the first substrate and the second substrate. The liquid crystals in the display panel 810 may be arranged by IPS (in-plane switching).

The panel driver 830 may drive the display panel 810 based on a control signal and/or a data signal transmitted from the display controller 805. The panel driver 830 may include a timing controller 832, a gate driver 834, and/or a data driver 836.

The timing controller 832 may receive a control signal, an image signal, etc. from the display controller 805. For example, the timing controller 832 may receive an RGB signal, a vertical synchronization signal (Vsync), etc. from the display controller 805. The timing controller 832 may control the gate driver 834 and/or the data driver 836 in response to the control signal. The timing controller 832 may rearrange the image signal according to the specification of the data driver 836 and transmit the image signal to the data driver 836.

The gate driver 834 and the data driver 836 may supply a scanning signal and an image signal to the display panel 810 through a gate line GL and a data line DL under the control of the timing controller 832.

Meanwhile, the data driver 836 may include a plurality of source driver ICs (Source Driver Integrated Circuits) (not illustrated) corresponding to the plurality of data lines DL.

The backlight unit 850 may supply light to the display panel 810. To this end, the backlight unit 850 may include at least one light source 852 that outputs light, a scan driver 854 that controls scanning operation of the light source 852, and/or a light source driver 856 that turns on/off the light source 852.

The vehicle display device 251 may display a predetermined image using light emitted from the backlight unit 850 in a state where light transmittance of the liquid crystal layer is controlled by an electric field formed between the pixel electrode and the common electrode of the display panel 810.

The power supply 190 may supply a common electrode voltage Vcom to the display panel 810. The power supply 190 may supply a gamma voltage to the data driver 836. The power supply 190 may supply driving power for driving the light source 852 to the backlight unit 850.

The vehicle display device 251 may be driven using a local dimming method. The backlight unit 850 may be divided into a plurality of blocks. The backlight unit 850 may be driven for each divided block. For example, when the backlight unit 850 is driven using the local dimming method, the display panel 810 may have a plurality of divided regions corresponding to blocks of the backlight unit 850, respectively. In this instance, intensity of light emitted from each block of the backlight unit 850 may be adjusted according to a luminance level of each of the divided regions of the display panel 810, for example, a peak value of a gray level or a color coordinate signal. That is, the vehicle display device 251 may reduce intensity of light emitted from a block corresponding to a dark part of an image among the blocks of the backlight unit 850 and increase intensity of light emitted from a block corresponding to a bright part of the image. In this way, a contrast ratio and clarity of an image output through the vehicle display device 251 may be improved.

The vehicle display device 251 may set a dimming value for each block based on a block-wise representative value for each block of the backlight unit 850. The display controller 805 may determine a block-wise representative value for each block of the backlight unit 850 based on an image signal.

According to one embodiment, the block-wise representative value may include a luminance level of an image corresponding to each block of the backlight unit 850. The display controller 805 may determine a luminance level for an entire region and/or a partial region of the image based on the image signal. For example, the display controller 805 may determine an average luminance level (APL) of each of a plurality of divided regions corresponding to each block of the backlight unit 850, an average luminance level of the entire region of the image, etc.

The display controller 805 may calculate a dimming value of each block of the backlight unit 850 based on a luminance level of the entire region and/or the partial region of the image. For example, the display controller 805 may calculate a dimming value of each block of the backlight unit 850 based on a luminance level of each of a plurality of divided regions, a luminance level of a peripheral region, a luminance level of the entire region, etc. In this instance, the display controller 805 may calculate a dimming value such that, among the blocks of the backlight unit 850, intensity of light emitted from a block in a region having a low luminance level decreases and intensity of light emitted from a block in a region having a high luminance level increases.

The display controller 805 may output the calculated dimming value to the backlight unit 850. The display controller 805 may output a signal including the calculated dimming value to the backlight unit 850. The backlight unit 850 may adjust intensity of light emitted from the light source 852 based on the dimming value received from the display controller 805.

The light source 852 may be turned on or off according to a driving signal received from the light source driver 856. The light source driver 856 may generate a driving signal based on a dimming value output from the display controller 805. The driving signal may be a pulse width modulation (PWM) signal. For example, intensity of light emitted from the light source 852 may be adjusted according to amplitude of the driving signal received from the light source driver 856. For example, a time for which light is emitted from the light source 852 may be adjusted according to a pulse width of the driving signal received from the light source driver 856.

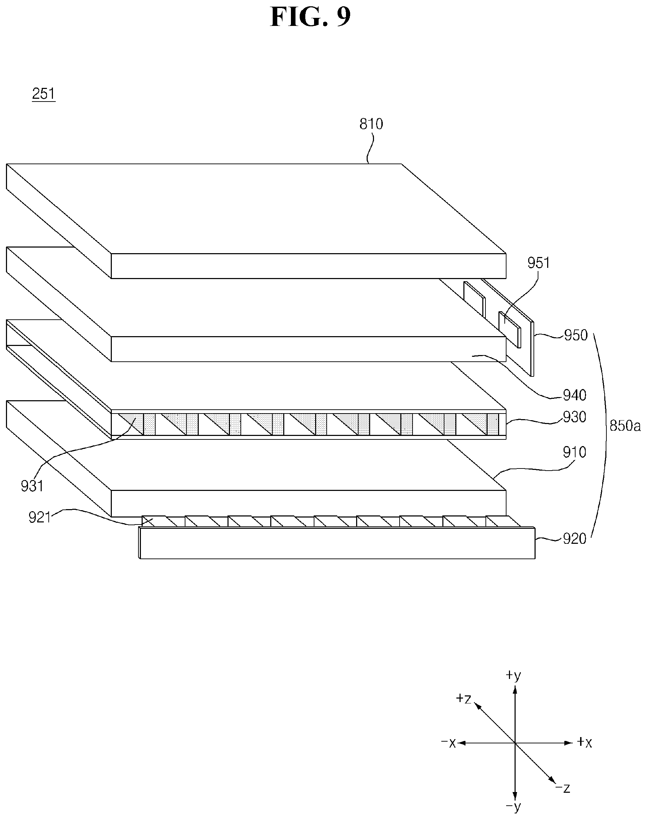

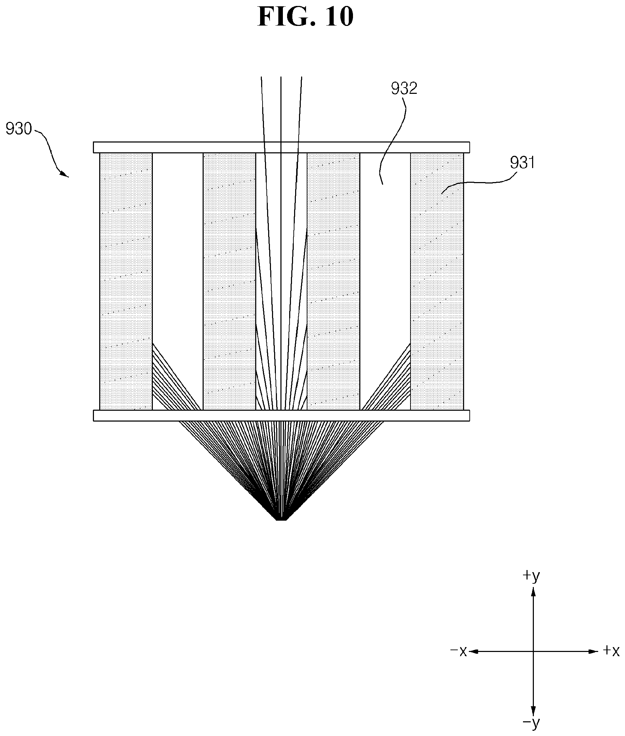

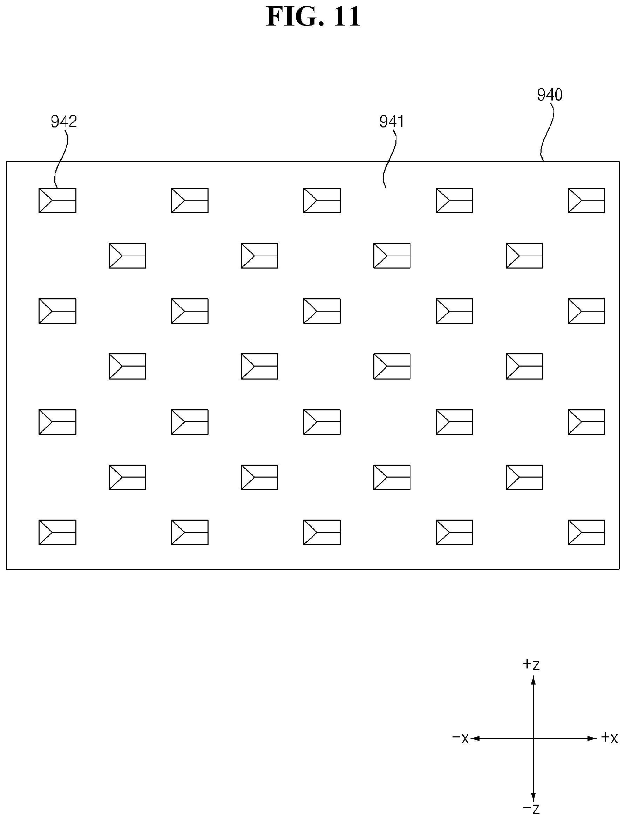

FIGs. 9 to 17 are drawings for reference in description of the backlight unit according to one embodiment of the present disclosure.

Hereinafter, directions are defined based on a rectangular coordinate system. In the rectangular coordinate system, an x-axis direction may be defined as a left-right direction. In this instance, with respect to the origin, a direction toward +x may refer to a right direction, and a direction toward -x may refer to a left direction. In addition, a y-axis direction may be defined as a front-rear direction. In this instance, with respect to the origin, a direction toward +y may refer to a front direction, and a direction toward -y may refer to a rear direction. In addition, a z-axis direction may be defined as a vertical direction. In this instance, with respect to the origin, a direction toward +z may refer to an upward direction, and a direction toward -z may refer to a downward direction.

Meanwhile, in the present disclosure, the case where a driver's seat is placed on the left side and a passenger seat is placed on the right side based on the overall length direction is described as an embodiment. However, the present disclosure is not limited thereto. For example, the present disclosure may be applied to an embodiment in which the driver's seat is placed on the right side and the passenger seat is placed on the left side based on the overall length direction, or an embodiment in which the driver's seat is placed in the center and passenger seats are placed on both sides.

Referring to FIGs. 9 to 11, a first backlight unit 850a according to one embodiment of the present disclosure, not falling under the scope of the claimed vehicle display device, may include a first light guide panel (LGP) 910, a first light source unit 920, a light control film (LCF) 930, a second light guide panel 940, and/or a second light source unit 950.

The first light source unit 920 may emit light to the first light guide panel 910. In the present disclosure, the first light source unit 920 is disposed on the lower side of the first light guide panel 910 and emits light in the upward direction. However, the present disclosure is not limited thereto.

The first light source unit 920 may include a plurality of first light sources 921. The plurality of first light sources 921 may be LEDs. The plurality of first light sources 921 may be implemented as an array arranged in the left-right direction.

The first light guide panel 910 may function as a surface light source. The first light guide panel 910 may reflect light emitted from the first light source unit 920. Light reflected from the first light guide panel 910 may be directed in the front direction. Light emitted from the first light guide panel 910 may be incident on the light control film 930.

The first light guide panel 910 may include a first reflection board (not illustrated) that reflects light emitted from the first light source unit 920. The first reflection board may be placed on the rear side of the first light guide panel 910. The first reflection board may be made of a material having high reflectivity. For example, the first reflection board may be made of silver (Ag), aluminum (Al), etc.

At least one diffusion sheet (not illustrated), a prism sheet (not illustrated), etc. may be disposed between the first light guide panel 910 and the light control film 930. The diffusion sheet may scatter light emitted from the first light guide panel 910 and evenly distribute the light over one surface. The prism sheet may refract and/or concentrate light emitted from the diffusion sheet.

The light adjustment film 930 may be disposed between the first light guide panel 910 and the second light guide panel 940. The light adjustment film 930 may emit at least a part of light emitted from the first light guide panel 910 in the front direction. A path of the light emitted from the light adjustment film 930 may correspond to the front-rear direction. The light emitted from the light adjustment film 930 may be incident on the second light guide panel 940.

The light adjustment film 930 may include a plurality of absorption patterns 931 made of a material that absorbs light. For example, the plurality of patterns 931 may include a black pigment, a black dye, a black resin, etc. Each of the plurality of absorption patterns 931 may be formed to extend in the vertical direction. Each of the plurality of absorption patterns 931 may be formed to have a predetermined height in the front-rear direction. The plurality of absorption patterns 931 may be implemented as an array arranged in the left-right direction.

The light adjustment film 930 may further include a transmission pattern 932 made of a material that transmits light and is arranged between the plurality of absorption patterns 931. For example, the transmission pattern 932 may be made of a transparent resin, etc.

The second light source unit 950 may emit light to the second light guide panel 940. The second light source unit 950 may be arranged on the right side of the second light guide panel 940. The second light source unit 950 may include a plurality of second light sources 951. The plurality of second light sources 951 may be LEDs. The plurality of second light sources 951 may be implemented as an array arranged in the vertical direction.

The second light guide panel 940 may function as a surface light source. The second light guide panel 940 may emit at least a part of light emitted from the light adjustment film 930 in the front direction. A path of the light emitted from the light adjustment film 930 may correspond to the front-rear direction. A path of light emitted from the light adjustment film 930 and transmitted through the second light guide panel 940 may correspond to the front-rear direction.

The second light guide panel 940 may reflect light emitted from the second light source unit 950. The second light guide panel 940 may include a second reflection board 941 that reflects light emitted from the second light source unit 950. The second reflection board 941 may be disposed on the rear side of the second light guide panel 940.

A plurality of first reflection patterns 942 may be arranged on the second reflection board 941. In this instance, light incident on and reflected from the first reflection pattern 942 may be directed toward the driver's seat. That is, light emitted from the second light source unit 950 and reflected from the second light guide panel 940 may be emitted toward the driver's seat. For example, the first reflection pattern 942 may be formed to protrude and/or sink in a predetermined shape so that the reflected light is directed toward the driver's seat.

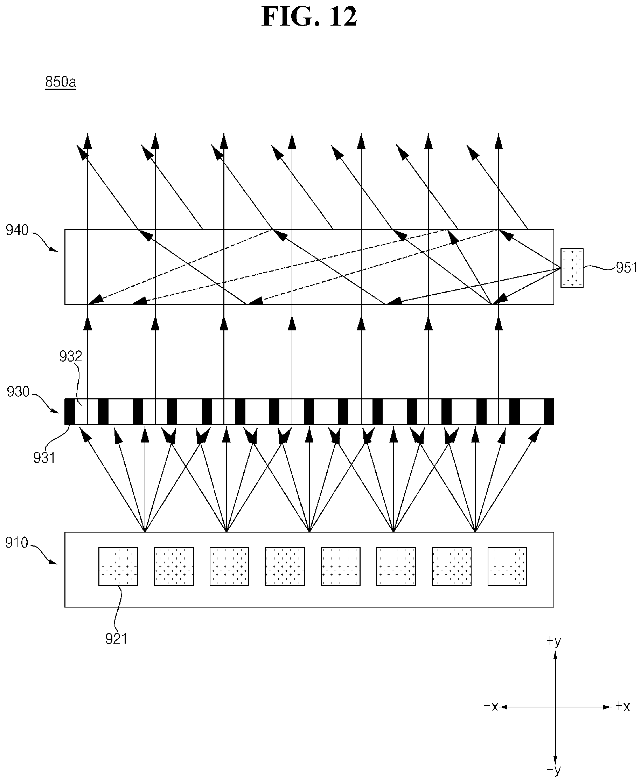

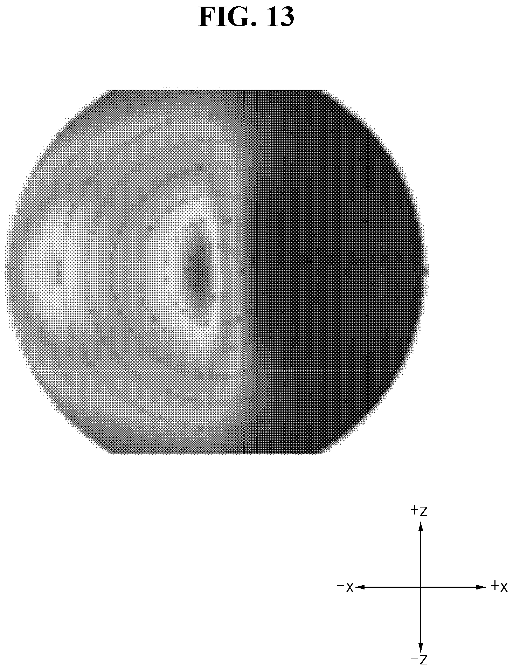

Referring to FIGs. 12 and 13, light may be emitted from the first light sources 921 included in the first light source unit 920 and the second light sources 951 included in the second light source unit 950.

Light emitted from the first light sources 921 may be reflected from the first light guide panel 910 and directed to the light adjustment film 930. A part of light incident on the light adjustment film 930 may be absorbed by the absorption pattern 931. The other part of the light incident on the light adjustment film 930 may be emitted from the light adjustment film 930 in a direction parallel to the vertical direction. Light emitted from the light adjustment film 930 may pass through the second light guide panel 940 and proceed in the front direction. Accordingly, the user located facing the front of the display panel 810 may view an image based on light emitted from the first light sources 921.

Meanwhile, light emitted from the second light sources 951 may be reflected from the second light guide panel 940. In this instance, light reflected from the first reflection pattern 942 of the second light guide panel 940 may be emitted toward the driver's seat located on the left. Accordingly, the user located in the driver's seat may view an image based on light emitted from the second light sources 951.

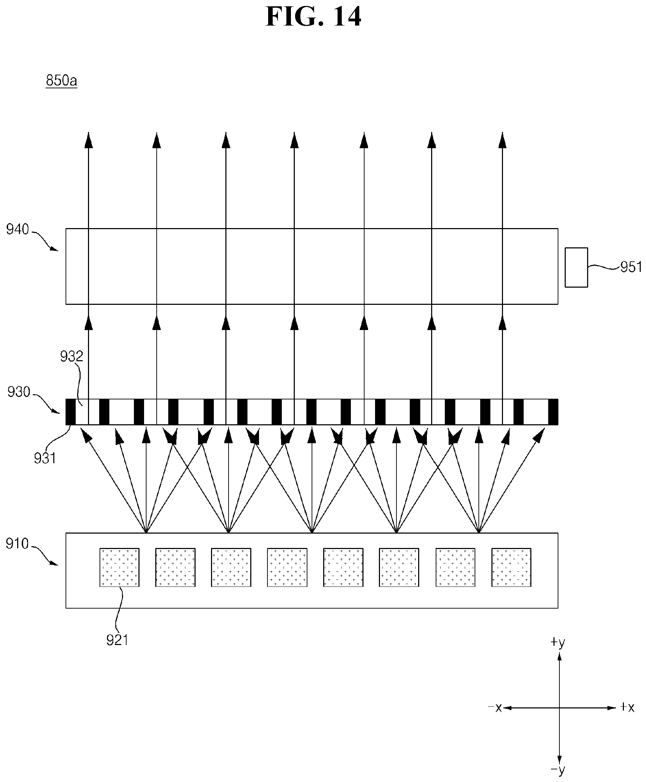

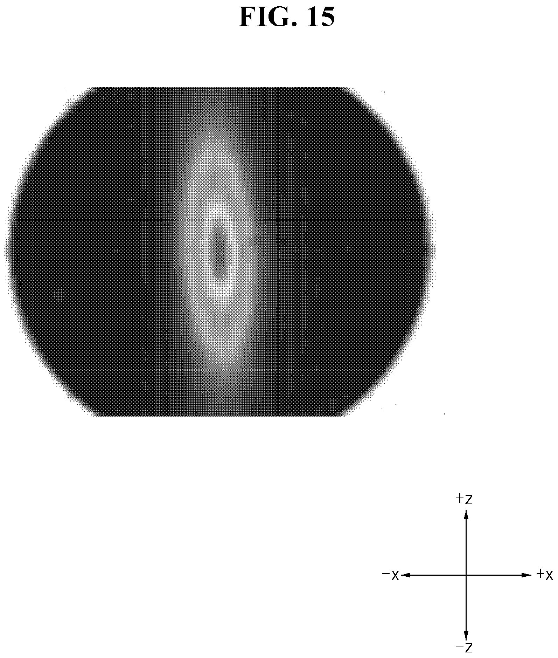

Referring to FIGs. 14 and 15, light may be emitted from the first light sources 921 included in the first light source unit 920. The light emitted from the first light sources 921 may travel in the front direction through the first light guide panel 910, the light adjustment film 930, and the second light guide panel 940. Accordingly, the user located facing the front of the display panel 810 may view an image based on the light emitted from the first light sources 921.

Meanwhile, light may not be emitted from the second light sources 951 included in the second light source unit 950. When light is not emitted from the second light sources 951, light emitted from the display panel 810 may not be directed toward the driver's seat. Accordingly, the user located in the driver's seat may be unable to view an image.

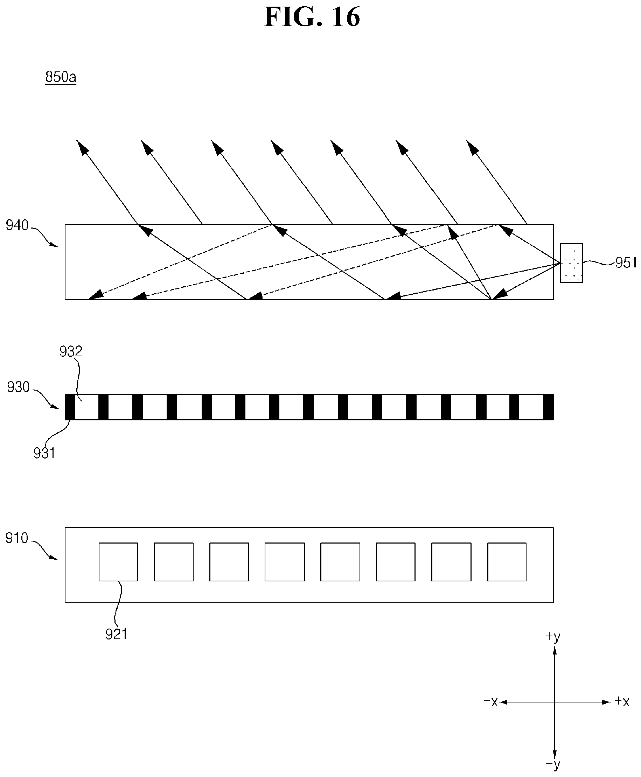

Referring to FIG. 16, light may be emitted from the second light sources 951 included in the second light source unit 950. The light emitted from the second light sources 951 may be reflected from the second light guide panel 940 and emitted toward the driver's seat located on the left. Accordingly, the user located in the driver's seat may view an image based on the light emitted from the second light sources 951.

Meanwhile, light may not be emitted from the first light sources 921 included in the first light source unit 920. When light is not emitted from the first light sources 921, light may not be directed in the front direction from the front of the display panel 810. Accordingly, the user located facing the front of the display panel 810 may be unable to view an image.

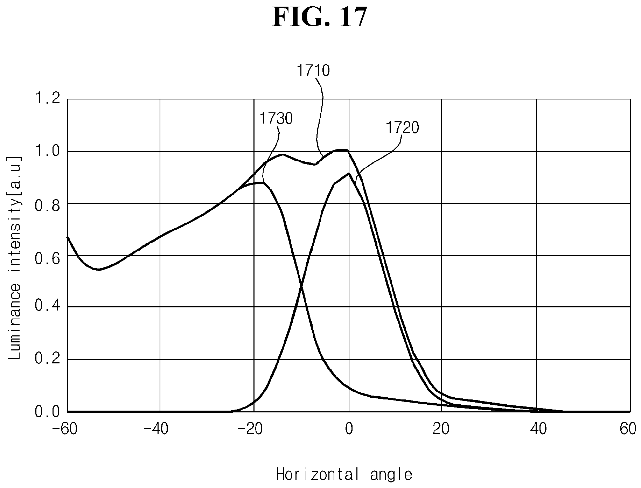

Referring to FIG. 17, luminance of an image viewed by the user may vary depending on the angle at which the display panel 810 is viewed.

When light is emitted from both the first light sources 921 and the second light sources 951 (1710), the user may view an image having predetermined or higher luminance from an angle of 0° at which the display panel 810 is viewed from the front to an angle of -40° at which the display panel 810 is viewed from the driver's seat.

Meanwhile, when light is emitted only from the first light sources 921 (1720), the user may view the image having the predetermined or higher luminance at the angle of 0° at which the display panel 810 is viewed from the front, whereas the user may be unable to view the image at the angle of - 40° at which the display panel 810 is viewed from the driver's seat.

Meanwhile, when light is emitted only from the second light sources 951 (1730), the user may view the image having the predetermined or higher luminance at the angle of -40° at which the display panel 810 is viewed from the driver's seat, whereas it may be extremely difficult for the user to view the image at the angle of 0° at which the display panel 810 is viewed from the front.

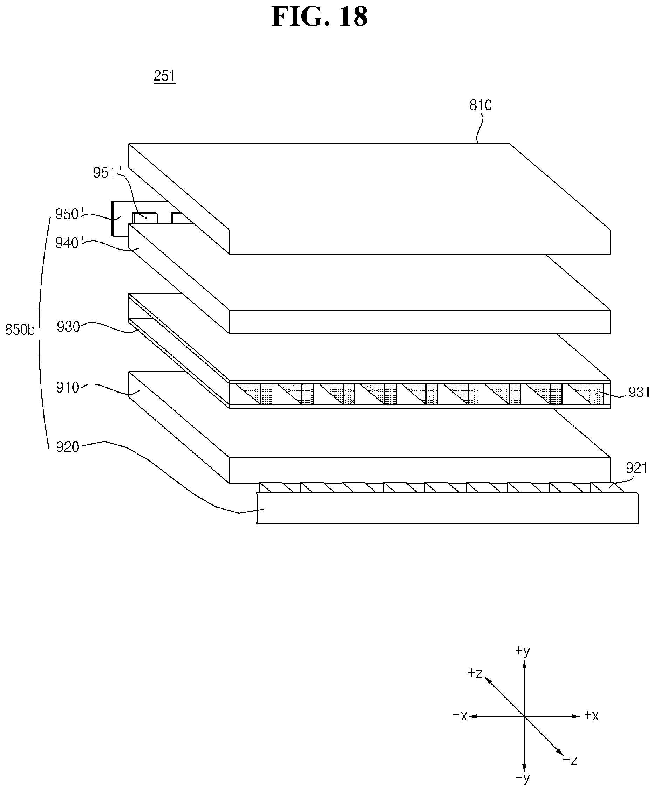

FIGs. 18 to 25 are drawings for reference in description of the backlight unit according to an embodiment of the present claimed vehicle display device. Detailed description of content that overlaps with that described in FIGs. 9 to 17 will be omitted.

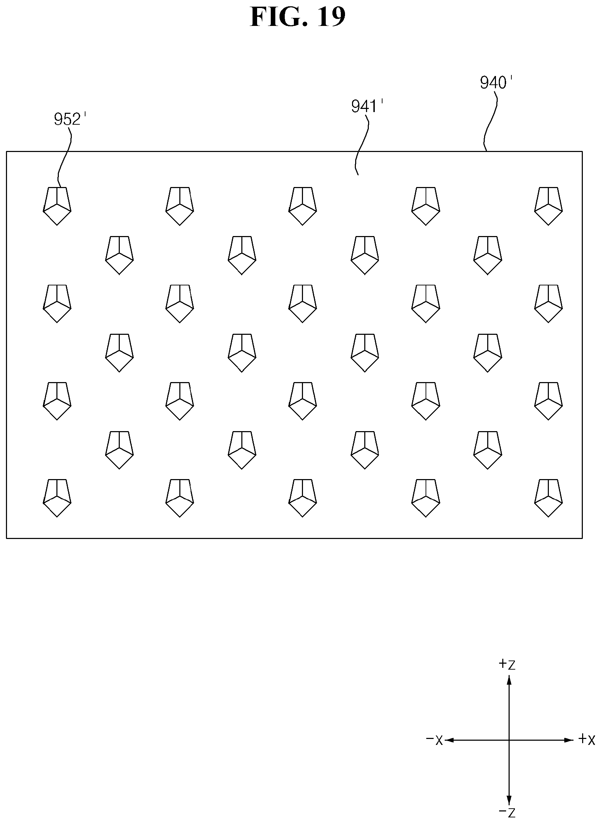

Referring to FIGs. 18 and 19, a backlight unit 850b according to an embodiment of the present claimed vehicle display device may include a first light guide panel 910, a first light source unit 920, a light control film 930, a third light guide panel 940', and/or a third light source unit 950'.

The third light source unit 950' may emit light to the third light guide panel 940'. In the present disclosure, a description will be given of the case where the third light source unit 950' is disposed above the third light guide panel 940' and emits light in the downward direction as an example. However, the present disclosure is not limited thereto. For example, the third light source unit 950' may be disposed below the third light guide panel 940' and emit light in the upward direction.

The third light source unit 950' may include a plurality of third light sources 951'. The plurality of third light sources 951' may be LEDs. The plurality of third light sources 951' may be implemented as an array arranged in the left-right direction.

The third light guide panel 940' may function as a surface light source. The third light guide panel 940' may emit at least a part of light emitted from the light adjustment film 930 in the front direction. A path of the light emitted from the light adjustment film 930 may correspond to the front-rear direction. A path of the light emitted from the light adjustment film 930 and transmitted through the third light guide panel 940' may correspond to the front-rear direction.

The third light guide panel 940' may reflect light emitted from the third light source unit 950'. The third light guide panel 940' may include a third reflection board 941' that reflects light emitted from the third light source unit 950'. The third reflection board 941' may be arranged on the rear side of the third light guide panel 940'.

A plurality of second reflection patterns 942' may be arranged on the third reflection board 941'. In this instance, light incident on and reflected from the second reflection patterns 942' may be directed toward the driver's seat. That is, light emitted from the third light source unit 950' and reflected from the third light guide panel 940' may be emitted toward the driver's seat. For example, the second reflection patterns 942' may be formed to protrude and/or sink in a predetermined shape so that the reflected light may be directed toward the driver's seat.

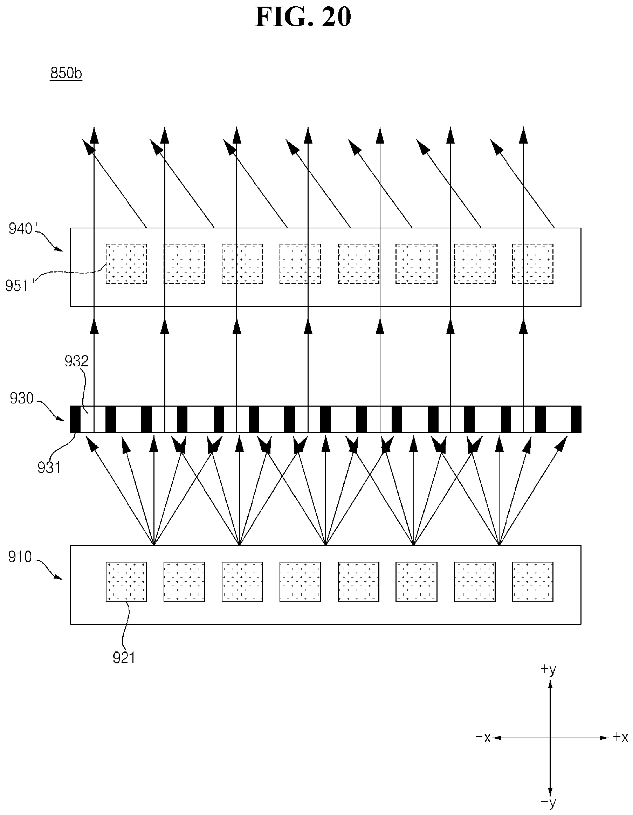

Referring to FIG. 20, light may be emitted from the first light sources 921 included in the first light source unit 920 and third light sources 951' included in the third light source unit 950'.

The light emitted from the first light sources 921 may travel in the front direction through the first light guide panel 910, the light adjustment film 930, and the third light guide panel 940'. Accordingly, the user located facing the front of the display panel 810 may view an image based on the light emitted from the first light sources 921.

Meanwhile, light emitted from the third light sources 951' may be reflected from the third light guide panel 940' and emitted toward the driver's seat located on the left. Accordingly, the user located in the driver's seat may view an image based on the light emitted from the third light sources 951'.

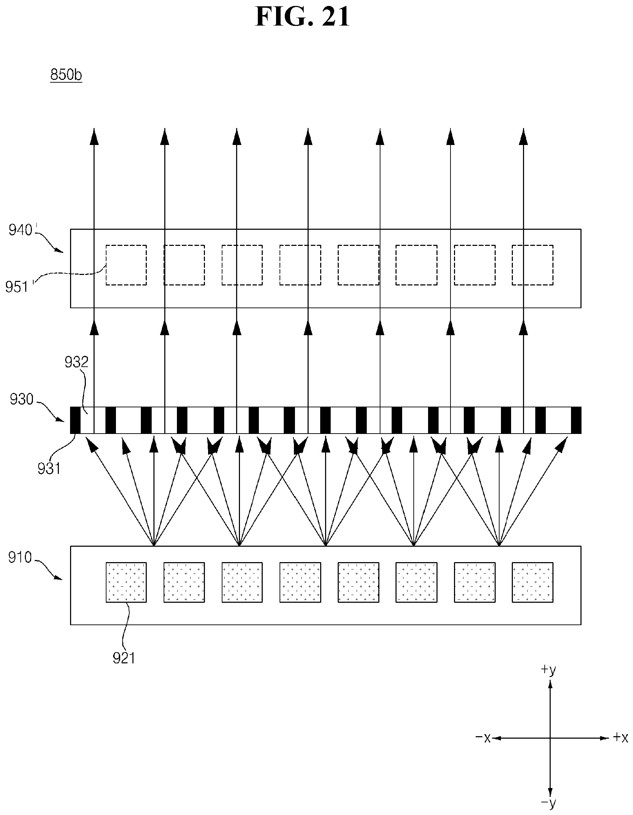

Referring to FIG. 21, light may be emitted from the first light sources 921 included in the first light source unit 920. The light emitted from the first light sources 921 may travel in the front direction through the first light guide panel 910, the light adjustment film 930, and the second light guide panel 940. Accordingly, the user located facing the front of the display panel 810 may view an image based on the light emitted from the first light sources 921.

Meanwhile, light may not be emitted from the third light sources 951' included in the third light source unit 950'. When light is not emitted from the third light sources 951', light emitted from the display panel 810 may not be directed toward the driver's seat. Accordingly, the user located in the driver's seat may be unable to view an image.

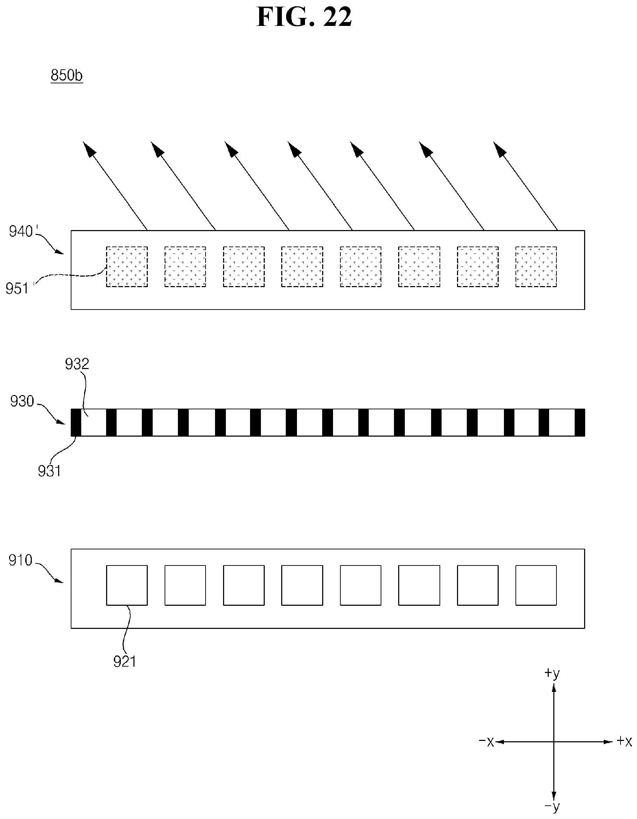

Referring to FIG. 22, light may be emitted from the third light sources 951' included in the third light source unit 950'. The light emitted from the third light sources 951' may be reflected from the third light guide panel 940' and emitted toward the driver's seat located on the left. Accordingly, the user located in the driver's seat may view an image based on the light emitted from the third light sources 951'.

Meanwhile, light may not be emitted from the first light sources 921 included in the first light source unit 920. When light is not emitted from the first light sources 921, the light may not be directed in the front direction from the front of the display panel 810. Accordingly, the user located facing the front of the display panel 810 may be unable to view an image.

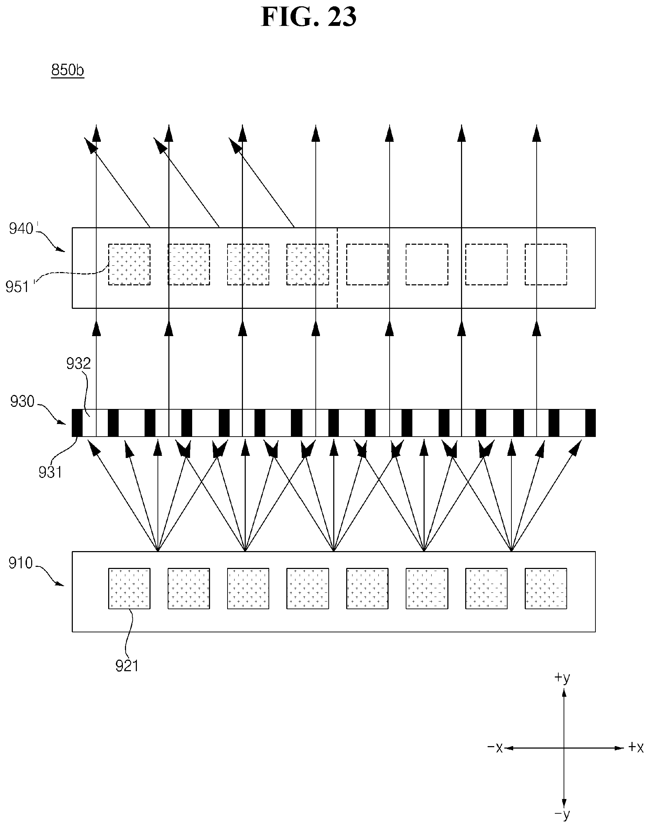

Referring to FIG. 23, light may be emitted from the first light sources 921 included in the first light source unit 920 and some of the third light sources 951' on the left side included in the third light source unit 950'.

The light emitted from the first light sources 921 may travel in the front direction through the first light guide panel 910, the light adjustment film 930, and the third light guide panel 940'. Accordingly, the user located facing the front of the display panel 810 may view an image over the entire region of the screen based on the light emitted from the first light sources 921.

Meanwhile, light emitted from some of the third light sources 951' on the left side may be reflected from the third light guide panel 940' and emitted toward the driver's seat located on the left side. Accordingly, the user located in the driver's seat may view an image limited to a left partial region of the screen based on the light emitted from the some of the third light sources 951' on the left side.

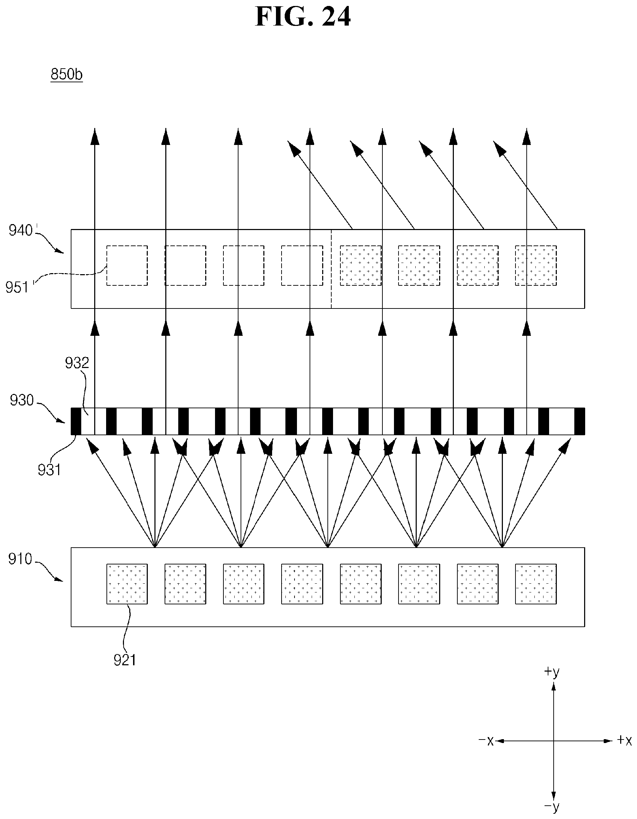

Referring to FIG. 24, light may be emitted from the first light sources 921 included in the first light source unit 920 and some of the third light sources 951' on the right side included in the third light source unit 950'.

The light emitted from the first light sources 921 may travel in the front direction through the first light guide panel 910, the light adjustment film 930, and the third light guide panel 940'. Accordingly, the user located facing the front of the display panel 810 may view an image over the entire region of the screen based on the light emitted from the first light sources 921.

Meanwhile, light emitted from some of the third light sources 951' on the right side may be reflected from the third light guide panel 940' and emitted toward the driver's seat located on the left side. Accordingly, the user located in the driver's seat may view an image limited to a right partial region of the screen based on the light emitted from some of the third light sources 951' on the right side.

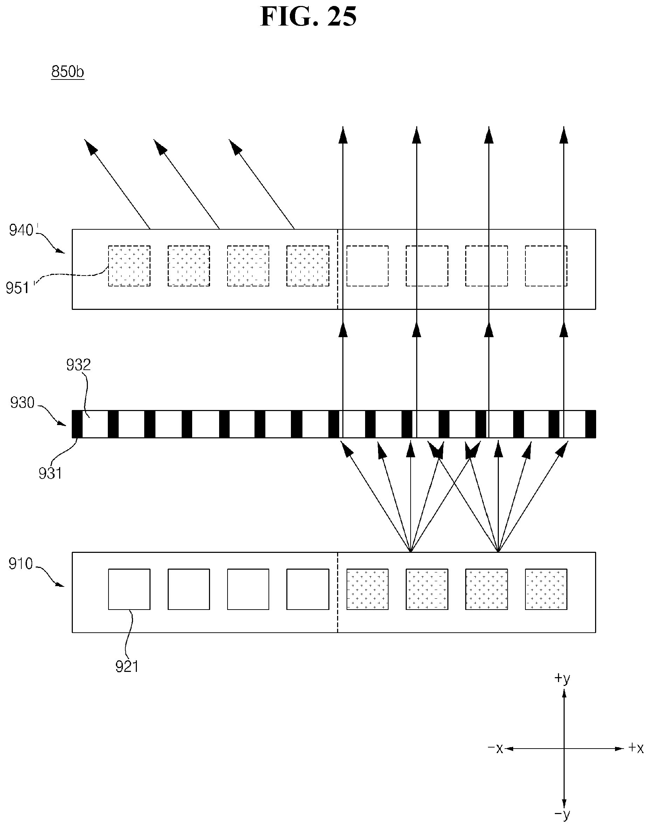

Referring to FIG. 25, light may be emitted from some of the first light sources 921 on the right side included in the first light source unit 920 and some of the third light sources 951' on the left side included in the third light source unit 950'.

Light emitted from some of the first light sources 921 on the right side may travel in the front direction through the first light guide panel 910, the light adjustment film 930, and the third light guide panel 940'. Accordingly, the user located facing the front of the display panel 810 may view an image limited to a right partial region of the screen based on light emitted from the first light sources 921.

Meanwhile, light emitted from some of the third light sources 951' on the left side may be reflected from the third light guide panel 940' and emitted toward the driver's seat located on the left side. Accordingly, the user located in the driver's seat may view an image limited to a left partial region of the screen based on light emitted from some of the third light sources 951' on the left side.

Accordingly, a viewing angle for a region of the display panel 810 on which the backlight units 850a and 850b according to various embodiments of the present disclosure are disposed may be adjusted.

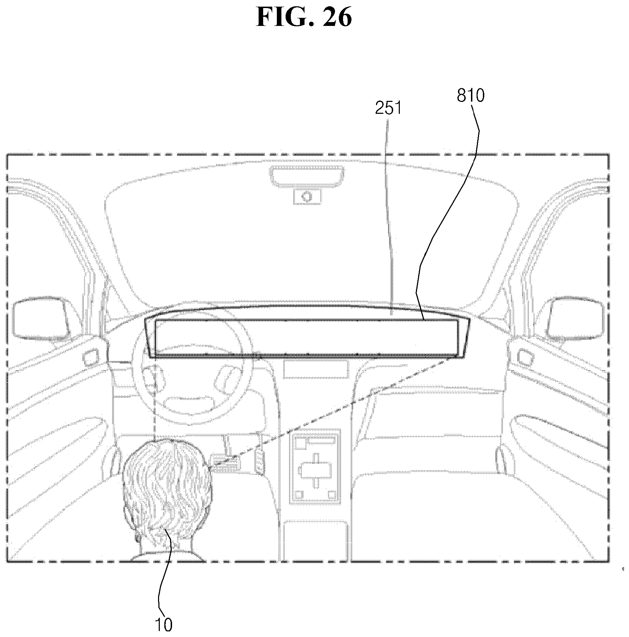

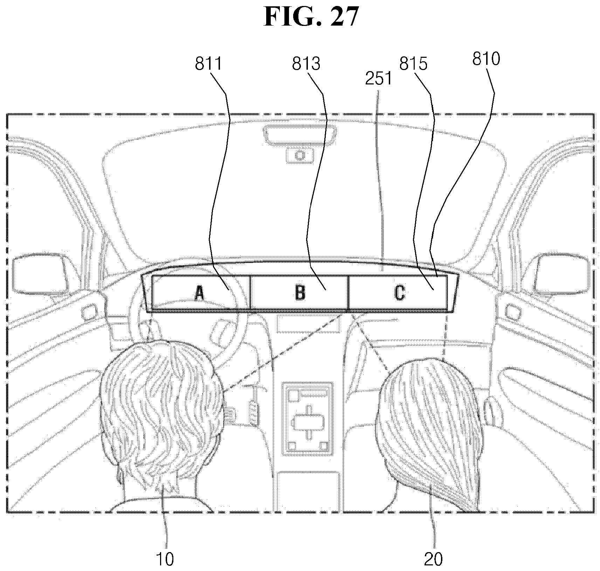

Referring to FIGs. 26 and 27, the display panel 810 corresponding to the instrument panel may be disposed in front of a driver 10 and/or a user 20 (hereinafter, passenger) located in the passenger seat. The driver 10 may gaze at the entire region of the display panel 810.

The display panel 810 may include a first region 811 corresponding to the driver 10, a second region 813 corresponding to the driver 10 and the passenger (20), and/or a third region 815 corresponding to the passenger 20. In the present disclosure, the case where the display panel 810 includes three regions 811, 813, and 815 is described as an example. However, the present disclosure is not limited thereto.

The vehicle display device 251 may output an image through at least one region of the display panel 810. For example, the vehicle display device 251 may output an instrument panel screen including driving speed, driving distance, etc. through the first region 811. For example, the vehicle display device 251 may output a control screen for controlling devices in the vehicle 100, such as a lamp device and an air conditioner, a screen including navigation information, etc. through the second region 813. For example, the vehicle display device 251 may output image content, such as a movie or a game, through the third region 815.

The backlight units 850a and 850b according to various embodiments of the present disclosure may be arranged to correspond to at least some of a plurality of regions of the display panel 810.

Referring to FIG. 25, the backlight units 850a and 850b according to various embodiments of the present disclosure may be arranged to correspond to the third region 815 of the display panel 810. Depending on whether light is emitted from light sources included in the backlight units 850a and 850b, a viewing angle for at least a part of the third region 815 may be adjusted. For example, the vehicle display device 251 may adjust a viewing angle for the entire third region 815 when a predetermined mode is set. In this instance, a restricted region may correspond to the entire third region 815.

Meanwhile, referring to FIG. 26, when the second backlight unit 850b is disposed to correspond to the third region 815 of the display panel 810, a viewing angle may be adjusted for at least a part of the third region 815. For example, when light is emitted from some of the third light sources 951' and no light is emitted from the other ones, a viewing angle for the driver's seat may be adjusted for a part of the third region 815 corresponding to the other ones of the third light sources 951' from which light is not emitted.

Referring to FIG. 27, the backlight units 850a and 850b according to various embodiments of the present disclosure may be arranged to correspond to the second region 813 and the third region 815 of the display panel 810. A viewing angle for at least a part of the second region 813 and the third region 815 may be adjusted depending on whether light is emitted from the light sources included in the backlight units 850a and 850b. For example, the vehicle display device 251 may adjust a viewing angle for the third region 815 among the second region 813 and the third region 815 when a predetermined mode is set.

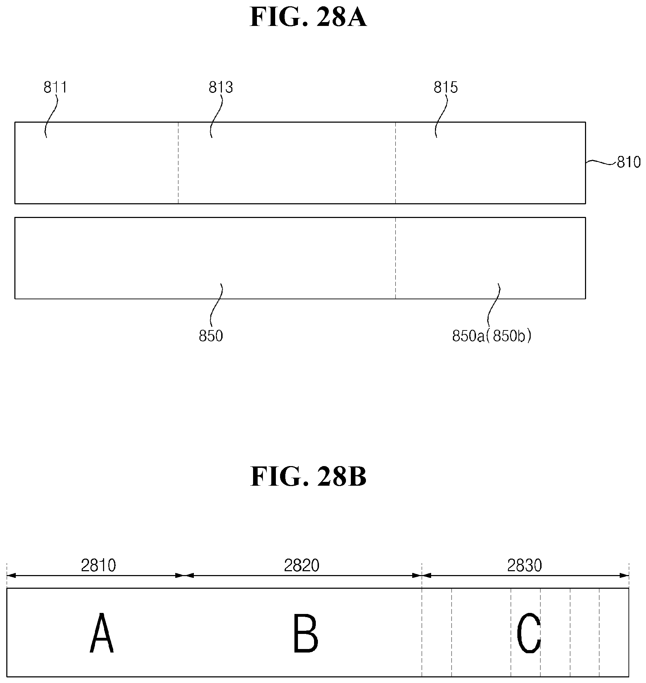

Meanwhile, referring to FIG. 28, when the backlight unit 850b is arranged corresponding to the second region 814 and the third region 815 of the display panel 810, a viewing angle may be adjusted for at least a part of the second region 813 and the third region 815. For example, when light is not emitted from the third light source 951' corresponding to the second region 813 and light is emitted from the third light source 951' corresponding to the third region 815, a viewing angle for the driver's seat may be adjusted in the second region 813.

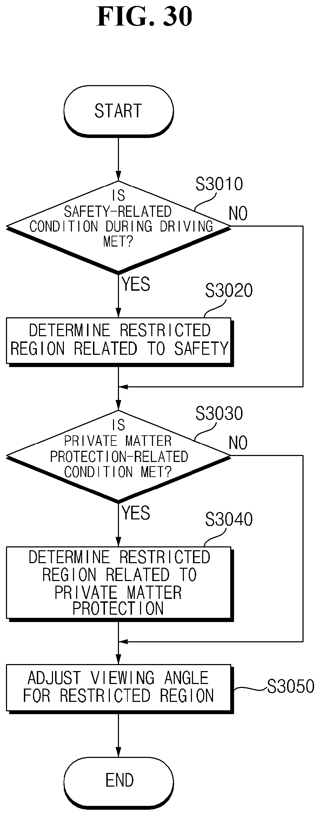

FIG. 30 is a flowchart for an operation method of the vehicle display device according to one embodiment of the present disclosure. In the following, it may be understood that at least some of operations performed by the vehicle display device 100 are performed by the signal processing device 170 and/or the processor 370.

Referring to FIG. 30, in operation of S3010, the vehicle display device 251 may determine whether a condition related to driving of the vehicle 100 (hereinafter, a safety-related condition) is met. Here, the safety-related condition may correspond to a condition related to safety when the vehicle 100 is driven.

According to one embodiment, the vehicle display device 251 may determine whether the safety-related condition is met based on at least one of a speed of the vehicle 100, a state of the transmission, whether the autonomous driving mode is set, whether a region of the display panel 810 in which a viewing angle is adjusted is used, a type of image output through the display panel 810, or a gaze of the user. For example, the vehicle display device 251 may determine that the safety-related condition is met when user input for adjusting a viewing angle of the display panel 810 during driving is received through the input unit 210. For example, the vehicle display device 251 may determine that the safety-related condition is met when the speed of the vehicle 100 is greater than a preset speed limit (for example, 10 km/h), and that the safety-related condition is not met when the speed of the vehicle 100 is less than the preset speed limit (for example, 10 km/h). For example, the vehicle display device 251 may determine that the vehicle display device 251 corresponds to a first mode when the autonomous driving mode is set, and that the vehicle display device 251 does not correspond to the safety-related condition when the manual mode is set. For example, the vehicle display device 251 may determine that the vehicle display device 251 does not correspond to the safety-related condition when only driving-related content (for example, instrument panel, navigation information) is output through the display panel 810.

According to one embodiment, the vehicle display device 251 may perform determination related to the safety-related condition when the state of the transmission is forward (D), reverse (R), or neutral (N), and may suspend determination related to the safety-related condition when the state is parked (P).

According to one embodiment, data corresponding to eyes of the user located in the driver's seat may be acquired through the internal camera 220 installed in the vehicle 100. In this instance, the vehicle display device 251 may suspend determination related to the safety-related condition upon determining that a gaze of the driver is directed forward based on gaze information of the driver.

When the safety-related condition is met in operation of S3020, the vehicle display device 251 may determine a restricted region related to safety during driving (hereinafter, "safety-related region") in the display panel 810.

According to one embodiment, the vehicle display device 251 may determine a region of the display panel 810 adjacent to the passenger seat as the safety-related region when corresponding to the safety-related condition. For example, the region of the display panel 810 adjacent to the passenger seat may include at least the third region 815. Meanwhile, the area of the safety-related region may increase as the speed of the vehicle 100 increases. For example, when the speed of the vehicle 100 is less than a first speed (for example, 60 km/h), the third region 815 may be included in the safety-related region. For example, when the speed of the vehicle 100 is greater than or equal to the first speed (for example, 60 km/h) and less than a second speed (for example, 80 km/h), the third region 815 and a part of the second region 813 adjacent to the third region 815 may be included in the safety-related region. For example, when the speed of the vehicle 100 is greater than or equal to a third speed (for example, 100 km/h), the second region 813 and the third region 815 may be included in the safety-related region. That is, as the speed of the vehicle 100 increases, the area of the second region 813 included in the safety-related region may increase in a direction toward the driver's seat. In this instance, the area of the second region 813 included in the safety-related region may gradually change depending on the change in the speed of the vehicle 100.

According to one embodiment, the vehicle display device 251 may determine the safety-related region based on a type of content output through the display panel 810. For example, the vehicle display device 251 may determine the safety-related region from a remaining region of the display panel 810 excluding a region where the driving-related content is output based on the driving-related content (for example, instrument panel and navigation information) output through the display panel 810. For example, based on image content, such as a movie, a game, or an OTT service, output through the display panel 810, the vehicle display device 251 may determine a region of the display panel 810 where the image content is output as the safety-related region.

In operation of S3030, the vehicle display device 251 may determine whether a condition related to private matter (hereinafter, "private matter-related condition") is met. Here, the private matter-related condition may include at least one of a condition related to private matter of the driver 10 and a condition related to private matter of the passenger 20. For example, when content corresponding to the passenger seat is output through the display panel 810, the vehicle display device 251 may determine that a condition related to the private matter of the passenger 20 is met. In this instance, the content corresponding to the passenger seat may include content transmitted from a mobile device of the passenger 20 to the vehicle 100, content preset as corresponding to the passenger 20, etc.

Meanwhile, according to one embodiment, the vehicle display device 251 may perform determination related to the private matter-related condition based on whether the passenger 20 is located in the passenger seat. For example, data corresponding to the passenger seat may be acquired through the internal camera 220 installed in the vehicle 100. In this instance, the vehicle display device 251 may perform determination related to the private matter-related condition based on the fact that the passenger 20 is located in the passenger seat. Meanwhile, the vehicle display device 251 may suspend the determination related to the private matter-related condition based on the fact that the passenger 20 is not located in the passenger seat.

In operation of S3040, when the private matter-related condition is met, the vehicle display device 251 may determine a restricted region related to private matter (hereinafter, "private matter-related region") in the display panel 810. For example, when a message transmitted from the mobile device of the passenger 20 to the vehicle 100 is output through the second region 813 of the display panel 810, the second region 813 may be determined as the private matter-related region. For example, when image content preset as exclusive content of the passenger 20 is output through the third region 815 of the display panel 810, the third region 815 may be determined as the private matter-related region.

In operation of S3050, the vehicle display device 251 may adjust a viewing angle for the restricted region. The vehicle display device 251 may control emission of light for the backlight units 850a and 850b corresponding to a region of the display panel 810 determined as at least one of the safety-related region and the private matter-related region. For example, when the third region 815 is determined as the safety-related region and the second region 813 is determined as the private matter-related region, the vehicle display device 251 may control emission of light for the backlight units 850a and 850b corresponding to the second region 813 and the third region 815, respectively.

According to one embodiment, data corresponding to the eyes of the user located in the driver's seat may be acquired through the internal camera 220 installed in the vehicle 100. In this instance, the vehicle display device 251 may release restriction on emission of light directed toward the driver's seat upon determining that the gaze of the driver is directed forward based on gaze information of the driver. For example, when the gaze of the driver is directed forward, the vehicle display device 251 may emit light through the second light source unit 850 or the third light source unit 850'.

According to one embodiment, data corresponding to the driver's seat and/or the passenger seat may be acquired through the internal camera 220 installed in the vehicle 100. In this instance, the vehicle display device 251 may release restriction on emission of light toward the driver's seat based on the fact that the driver 10 is not located in the driver's seat. For example, when the driver 10 is not located in the driver's seat, the vehicle display device 251 may emit light through the second light source unit 850 or the third light source unit 850'. In addition, the vehicle display device 251 may release restriction on emission of light toward the passenger seat based on the fact that the passenger 20 is not located in the passenger seat. For example, when the passenger 20 is not located in the passenger seat, the vehicle display device 251 may emit light through the first light source unit 920.

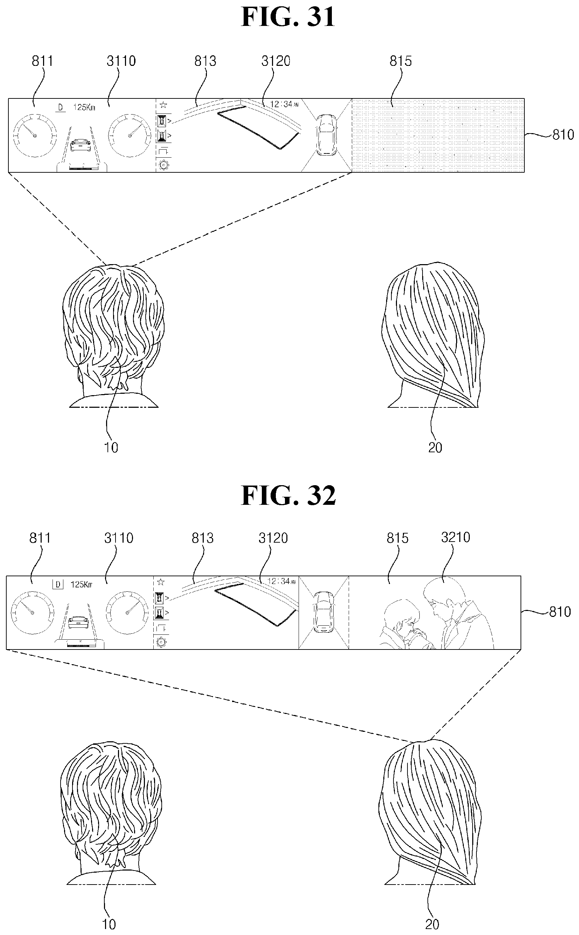

Referring to FIGs. 31 and 32, an instrument panel screen 3110 may be output through the first region 811 of the display panel 810. In addition, an around view monitor screen 3120 may be output through the camera 310 through the second region 813 of the display panel 810. In this instance, since the instrument panel screen 3110 and the around view monitor screen 3120 are driving-related contents, the vehicle display device 251 may determine the safety-related region among the remaining regions excluding the first region 811 and the second region 813.

Movie-related image content 3210 may be output through the third region 815 of the display panel 810. In this instance, the vehicle display device 251 may determine the third region 815 of the display panel 810, where the movie-related content 3210 corresponding to image content is output, as the safety-related region. Meanwhile, when the movie-related image content 3210 is transmitted from the mobile device of the passenger 20 or is preset as exclusive content of the passenger 20, the vehicle display device 251 may determine the third region 815 of the display panel 810 as the private matter-related region. In this instance, the third region 815, where the movie-related content 3210 is output, may correspond to a restricted region related to the private matter of the passenger seat in the private matter-related region (hereinafter, passenger seat-related region).

The vehicle display device 251 may restrict emission of light toward the driver's seat side from the third region 815 of the display panel 810, which is determined as the safety-related region and/or the passenger-side related region. The vehicle display device 251 may suspend emission of light from the second light source 951 and/or the third light source 951' corresponding to the third region 815 of the display panel 810. In this instance, light emitted toward the driver's seat side from the third region 815 may be limited.

Accordingly, while corresponding to the safety-related condition related to driving of the vehicle 100, the driver 10 may be able to view only the instrument panel screen 3110 and the around view monitor screen 3120 and may not be able to view the movie-related image content 3210. In addition, when not corresponding to the safety-related condition related to driving of the vehicle 100, the driver 10 may not be able to view the movie-related image content 3210. Meanwhile, the passenger 20 may be able to view all of the instrument panel screen 3110, the around view monitor screen 3120, and the movie-related content 3210.

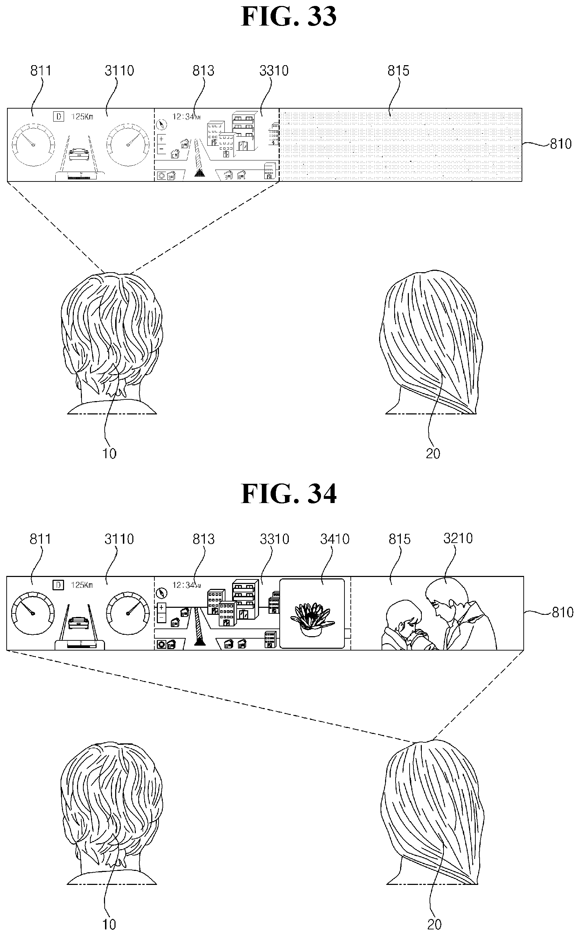

In the following FIGs. 33 to 36, the first region 811 of the display panel 810, where the instrument panel screen 3110 is output, is described as not being included in the safety-related region and the passenger seat-related region. In addition, the third region 815 of the display panel 810, where the movie-related image content is output, is described as being included in the safety-related region.

Referring to FIGs. 33 and 34, a navigation screen 3310 and photo-related content 3410 may be output through the second region 813 of the display panel 810. Since the instrument panel screen 3110 output through the first region 811 and the navigation screen 3310 output through the second region 813 are each driving-related content, the vehicle display device 251 may determine the safety-related region from among remaining regions excluding a region where the navigation screen 3310 is output in the first region 811 and the second region 813.

When the speed of the vehicle 100 is greater than or equal to a preset speed limit (for example, 10 km/h), the display device 251 may determine the third region 815, in which the movie-related content 3210 is output, as the safety-related region. Meanwhile, when the speed of the vehicle 100 is a predetermined speed (for example, 60 km/h), the display device 251 may determine a region where the photo-related content 3410 is output among the third region 815 and the second region 813 as the safety-related region.

The vehicle display device 251 may restrict emission of light toward the driver's seat side in a region where the photo-related content 3410 is output among the third region 815 and the second region 813 of the display panel 810, which are determined as safety-related regions.

Accordingly, when the speed of the vehicle 100 is greater than or equal to a preset speed limit (for example, 10 km/h) and less than a predetermined speed (for example, 60 km/h), the driver 10 may be able to view the instrument panel screen 3110, the navigation screen 3310, and the photo-related content 3410. In addition, when the speed of the vehicle 100 is greater than or equal to the predetermined speed (for example, 60 km/h), the driver 10 may be able to view only the instrument panel screen 3110 and the navigation screen 3310.

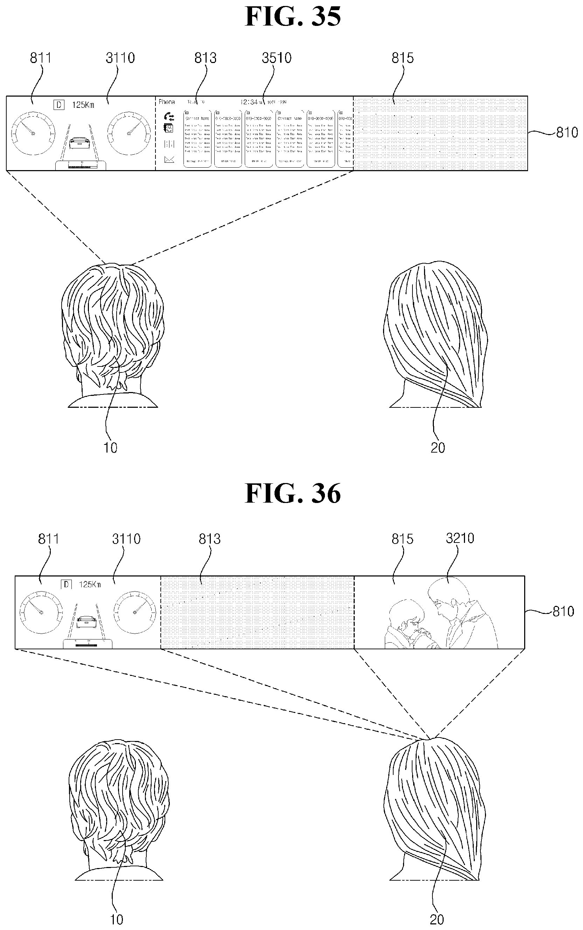

Referring to FIGs. 35 and 36, the movie-related content 3210 may be transmitted from the mobile device of the passenger 20 to the vehicle 100, or may be set as exclusive content of the passenger 20. In this instance, the third region 815, where the movie-related content 3210 is output, may be determined as the passenger seat-related region in the private matter-related region. The vehicle display device 251 may restrict emission of light toward the driver's seat side from the third region 815, which is determined as the passenger seat-related region.

In addition, text message-related content 3510 may be transmitted from the mobile device of the driver 10 to the vehicle 100 or set as exclusive content of the driver 10. In this instance, the second region 813 where the text message-related content 3510 is output may correspond to a restricted region related to the private matter of the driver's seat in the private matter-related region (hereinafter, driver's seat-related region).

The vehicle display device 251 may restrict emission of light toward the passenger seat side from the second region 813 determined as the driver's seat-related region. The vehicle display device 251 may suspend emission of light from the first light sources 921 corresponding to the second region 813. In this instance, light emitted toward the front from the second region 813 may be limited.

Accordingly, the driver 10 may only be able to view the instrument panel screen 3110 and the text message-related content 3510, and may not be able to view the movie-related image content 3210. In addition, the passenger 20 may only be able to view the instrument panel screen 3110 and the movie-related content 3210, and may not be able to view the text message-related content 3510.

As described above, according to at least one embodiment of the present disclosure, a viewing angle for the display panel 810 may be adjusted.

In addition, according to at least one embodiment of the present disclosure, a display region whose viewing angle is adjustable may be variably adjusted.

In addition, according to at least one embodiment of the present disclosure, private matter of a specific person in the vehicle 100 may be prevented from being exposed to others in the vehicle 100.

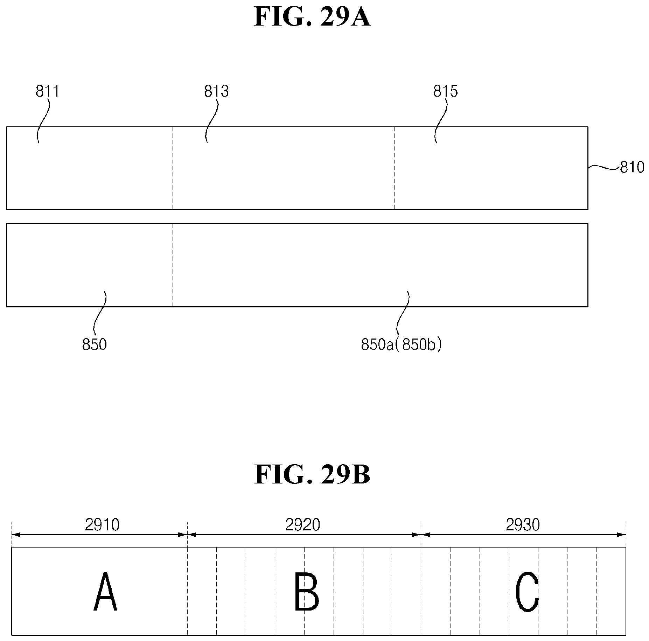

Referring to FIGs. 1 to 36, the vehicle display device 251 according to one embodiment of the present disclosure includes a display panel including a liquid crystal layer, a backlight unit configured to emit light to the display panel, and a controller, wherein the backlight unit includes a first light guide panel, a first light source configured to emit light to the first light guide panel, a second light guide panel disposed adjacent to the display panel, a second light source configured to emit light to the second light guide panel, and a light adjustment film including a plurality of absorption patterns made of a material absorbing light, and disposed between the first light guide panel and the second light guide panel, and the controller is configured to determine a first restricted region of the display panel based on a first condition related to driving of a vehicle, determine a second restricted region of the display panel based on a second condition related to private matter, and control the first light source and the second light source so that a viewing angle for each of the first restricted region and the second restricted region is changed.

In addition, according to one embodiment of the present disclosure, each of the plurality of absorption patterns may be formed to extend in a second direction perpendicular to a first direction in which the display panel and the backlight unit are stacked while having a predetermined height in the first direction, the plurality of absorption patterns may be arranged in a third direction perpendicular to the first direction and the second direction, and the second light guide panel may include a plurality of reflection patterns each formed in a predetermined shape so that light emitted from the second light source and reflected is directed toward a driver's seat.

In addition, according to one embodiment of the present disclosure, a plurality of first light sources may be disposed in the third direction to emit light in the second direction, and a plurality of second light sources may be disposed in the second direction to emit light in the third direction.

In addition, according to one embodiment of the present disclosure, a plurality of second light sources may be disposed in the third direction to emit light in the second direction, and the plurality of second light sources may correspond to a plurality of regions included in the display panel, respectively.

In addition, according to one embodiment of the present disclosure, the controller may be configured to determine the first restricted region in a remaining region of the display panel excluding a region in which predetermined content related to driving of the vehicle is output based on a fact that the predetermined content is output in the first condition, and suspend emission of light of the second light source so that the first viewing angle for the first restricted region is changed.

In addition, according to one embodiment of the present disclosure, the controller may be configured to suspend emission of light of the second light source so that the viewing angle for a third restricted region related to private matter of a passenger seat is changed in the first restricted region and the second restricted region, and suspend emission of light of the first light source so that the viewing angle for a fourth restricted region related to private matter of the driver's seat is changed in the second restricted region.

In addition, according to one embodiment of the present disclosure, the controller may be configured to determine a region of the display panel in which first content corresponding to the passenger seat is output as the third restricted region based on a fact that the first content is output in the second condition, and determine a region of the display panel in which second content corresponding to the driver's seat is output as the fourth restricted region based on a fact that the second content is output in the second condition.

In addition, according to one embodiment of the present disclosure, the controller may suspend determination related to the first condition and determination as to whether the first content is output in the second condition based on a fact that a gaze of a user located in the driver's seat is directed forward.

In addition, according to one embodiment of the present disclosure, the controller may be configured to perform determination related to the second condition based on a fact that the user is located in the passenger seat, and suspend determination related to the second condition based on a fact that the user is not located in the passenger seat.

In addition, according to one embodiment of the present disclosure, the controller may be configured to determine a region of the display panel adjacent to a passenger seat as the first restricted region based on a fact that a speed of the vehicle is greater than or equal to a preset speed limit in the first condition, and an area of the first restricted region increases as a speed of the vehicle increases.

The attached drawings are only intended to facilitate understanding of the embodiments disclosed in this specification, and the technical ideas disclosed in this specification are not limited by the attached drawings and should be understood to include all modifications, equivalents, or substitutes included in the spirit and technical scope of the present disclosure.

Meanwhile, a method of operating the vehicle display device of the present disclosure may be implemented as processor-readable code on a processor-readable recording medium. The processor-readable recording medium includes all types of recording devices in which data readable by the processor is stored. Examples of the processor-readable recording medium include a ROM, a RAM, a CD-ROM, a magnetic tape, a floppy disk, an optical data storage device, etc., and includes those implemented in the form of a carrier wave such as transmission via the Internet. In addition, the processor-readable recording medium may be distributed to computer systems connected by a network, so that the processor-readable code may be stored and executed in a distributed manner.

## Claims

1. A vehicle display device (251) comprising:
a display panel (810) including a liquid crystal layer;
a backlight unit (850) stacked in a first direction with the display panel (810) and configured to emit light to the display panel (810); and
a controller (170),
wherein the backlight unit (850) comprises:
a first light guide panel (910);
a plurality of first light sources (921) arranged in a third direction perpendicular to both the first direction and a second direction and configured to emit light to the first light guide panel (910) in the second direction perpendicular to the first direction;
a second light guide panel (940') disposed adjacent to the display panel (810);
a plurality of second light sources (951') arranged in the third direction and configured to emit light to the second light guide panel (940') in the second direction; and
a light adjustment film (930) including a plurality of absorption patterns (931) arranged in the third direction and made of a material absorbing light, and disposed between the first light guide panel (910) and the second light guide panel (940'),
wherein the plurality of absorption patterns (931) is formed to extend along the second direction while having a predetermined height in the first direction,
wherein the second light guide panel (940') includes a plurality of reflection patterns (942') each formed in a predetermined shape so that light emitted from the second light sources (951') and reflected is directed toward a driver's seat, and
wherein the controller (170) is configured to:
when limiting a viewing angle for the driver's seat of some regions among the plurality of areas constituting the display panel (810), suspend emission of light from some of the plurality of second light sources (951) corresponding to the some regions, and
when limiting a viewing angle for a passenger seat of the some regions, suspend emission of light from some of the plurality of first light sources (921) corresponding to the some regions.

2. The vehicle display device (251) according to claim 1, wherein the controller (170) is configured to:
determine a safety-related restricted region of the display panel (810) based on a first condition related to driving of a vehicle (100),
control the plurality of first light sources (921) and the plurality of second light sources (951') so that a viewing angle of the safety-related restricted region is changed.

3. The vehicle display device (251) according to claim 2, wherein the controller (170) is configured to:
determine the safety-related restricted region in a remaining region of the display panel (810) excluding a region in which predetermined content related to driving of the vehicle (100) is output based on the predetermined content being output in the safety-related condition, and
suspend emission of light some of the plurality of the second light sources (951') corresponding to the safety-related restricted region so that the viewing angle for the driver's seat of the safety-related restricted region is restricted.

4. The vehicle display device (251) according to any one of claim 2 or 3, wherein the controller (170) is configured to suspend determination related to the safety-related condition based on a gaze of a user located in the driver's seat being directed forward.

5. The vehicle display device (251) according to anyone of claims 2 to 4, wherein the controller (170) is configured to:
determine a region of the display panel (810) adjacent to the passenger seat as the safety-related restricted region based on a speed of the vehicle (100) being greater than or equal to a preset speed limit in the safety-related condition,
suspend emission of light from some of the plurality of second light sources (951') corresponding to the safety-related restricted region so that the viewing angle for the driver's seat of the safety-related restricted region is restricted, and
wherein an area of the safety-related restricted region increases as the speed of the vehicle (100) increases.

6. The vehicle display device (251) according to anyone of claims 1 to 5, wherein the controller (170) is configured to:
determine a privacy-related restricted region of the display panel (810) based on a privacy-related condition related to private matter, and
control the plurality of first light sources (921) and the plurality of second light sources (951') so that a viewing angle of the privacy-related restricted region is changed.

7. The vehicle display device (251) according to claim 6, wherein the controller (170) is configured to:
suspend emission of light of the second light source (951') so that the viewing angle for a passenger-related restricted region related to private matter of a passenger seat is changed in the privacy-related restricted region, and
suspend emission of light of the first light source (921) so that the viewing angle for a driver-related restricted region related to private matter of the driver's seat is changed in the privacy-related restricted region.

8. The vehicle display device (251) according to claim 7, wherein the controller (170) is configured to:
determine a region of the display panel (810) in which first content corresponding to the passenger seat is output as the passenger-related restricted region based on the first content being output in the privacy-related condition, and
determine a region of the display panel (810) in which second content corresponding to the driver's seat is output as the driver-related restricted region based on the second content being output in the privacy-related condition.

9. The vehicle display device (251) according to claim 8, wherein the controller (170) is configured to suspend determination as to whether the first content is output in the privacy-related condition based on a gaze of a user located in the driver's seat being directed forward.

10. The vehicle display device (251) according to anyone of claims 6 to 9, wherein the controller (170) is configured to:
perform determination related to the privacy-related condition based on a user being located in the passenger seat, and
suspend determination related to the privacy-related condition based on the user not being located in the passenger seat.

## Patentansprüche

1. Fahrzeuganzeigevorrichtung (251), umfassend:
ein Anzeigepanel (810), das eine Flüssigkristallschicht umfasst;
eine Hintergrundbeleuchtungseinheit (850), die in einer ersten Richtung mit dem Anzeigepanel (810) gestapelt und dazu eingerichtet ist, Licht auf das Anzeigepanel (810) zu emittieren; und
eine Steuerung (170),
wobei die Hintergrundbeleuchtungseinheit (850) umfasst:
eine erste Lichtleiterplatte (910);
eine Vielzahl erster Lichtquellen (921), die in einer dritten Richtung angeordnet sind, die sowohl zu der ersten Richtung als auch zu einer zweiten Richtung senkrecht ist, und die dazu eingerichtet sind, Licht in der zweiten Richtung, die zu der ersten Richtung senkrecht ist, auf die erste Lichtleiterplatte (910) zu emittieren;
eine zweite Lichtleiterplatte (940'), die benachbart zu dem Anzeigepanel (810) angeordnet ist;
eine Vielzahl zweiter Lichtquellen (951'), die in der dritten Richtung angeordnet und dazu eingerichtet sind, Licht in der zweiten Richtung auf die zweite Lichtleiterplatte (940') zu emittieren; und
eine Lichtanpassungsfolie (930), die eine Vielzahl von Absorptionsmustern (931) umfasst, die in der dritten Richtung angeordnet und aus einem lichtabsorbierenden Material hergestellt sind, und die zwischen der ersten Lichtleiterplatte (910) und der zweiten Lichtleiterplatte (940') angeordnet ist,
wobei die Vielzahl der Absorptionsmuster (931) so ausgebildet ist, dass sie sich entlang der zweiten Richtung erstreckt, während sie in der ersten Richtung eine vorbestimmte Höhe aufweist,
wobei die zweite Lichtleiterplatte (940') eine Vielzahl von Reflexionsmustern (942') umfasst, die jeweils in einer vorbestimmten Form ausgebildet sind, sodass Licht, das von den zweiten Lichtquellen (951') emittiert und reflektiert wird, zu einem Fahrersitz gerichtet wird, und
wobei die Steuerung (170) dazu eingerichtet ist:
beim Begrenzen eines Betrachtungswinkels einiger Bereiche aus der Vielzahl von Flächen, die das Anzeigepanel (810) bilden, für den Fahrersitz die Lichtemission von einigen der Vielzahl zweiter Lichtquellen (951'), die den einigen Bereichen entsprechen, auszusetzen, und
beim Begrenzen eines Betrachtungswinkels der einigen Bereiche für einen Beifahrersitz die Lichtemission von einigen der Vielzahl erster Lichtquellen (921), die den einigen Bereichen entsprechen, auszusetzen.

2. Fahrzeuganzeigevorrichtung (251) nach Anspruch 1, wobei die Steuerung (170) dazu eingerichtet ist:
einen sicherheitsbezogenen eingeschränkten Bereich des Anzeigepanels (810) auf Grundlage einer ersten Bedingung zu bestimmen, die sich auf das Fahren eines Fahrzeugs (100) bezieht,
die Vielzahl erster Lichtquellen (921) und die Vielzahl zweiter Lichtquellen (951') so zu steuern, dass ein Betrachtungswinkel des sicherheitsbezogenen eingeschränkten Bereichs geändert wird.

3. Fahrzeuganzeigevorrichtung (251) nach Anspruch 2, wobei die Steuerung (170) dazu eingerichtet ist:
den sicherheitsbezogenen eingeschränkten Bereich in einem verbleibenden Bereich des Anzeigepanels (810) unter Ausschluss eines Bereichs zu bestimmen, in dem vorbestimmter Inhalt im Zusammenhang mit dem Fahren des Fahrzeugs (100) ausgegeben wird, basierend darauf, dass der vorbestimmte Inhalt in der sicherheitsbezogenen Bedingung ausgegeben wird, und
die Lichtemission von einigen der Vielzahl zweiter Lichtquellen (951'), die dem sicherheitsbezogenen eingeschränkten Bereich entsprechen, auszusetzen, sodass der Betrachtungswinkel des sicherheitsbezogenen eingeschränkten Bereichs für den Fahrersitz eingeschränkt wird.

4. Fahrzeuganzeigevorrichtung (251) nach Anspruch 2 oder 3, wobei die Steuerung (170) dazu eingerichtet ist, eine Bestimmung bezüglich der sicherheitsbezogenen Bedingung basierend darauf auszusetzen, dass der Blick eines auf dem Fahrersitz befindlichen Benutzers nach vorn gerichtet ist.

5. Fahrzeuganzeigevorrichtung (251) nach einem der Ansprüche 2 bis 4, wobei die Steuerung (170) dazu eingerichtet ist:
einen an den Beifahrersitz angrenzenden Bereich des Anzeigepanels (810) als den sicherheitsbezogenen eingeschränkten Bereich zu bestimmen, basierend darauf, dass eine Geschwindigkeit des Fahrzeugs (100) größer oder gleich einer voreingestellten Geschwindigkeitsgrenze in der sicherheitsbezogenen Bedingung ist,
die Lichtemission von einigen der Vielzahl zweiter Lichtquellen (951'), die dem sicherheitsbezogenen eingeschränkten Bereich entsprechen, auszusetzen, sodass der Betrachtungswinkel des sicherheitsbezogenen eingeschränkten Bereichs für den Fahrersitz eingeschränkt wird, und
wobei eine Fläche des sicherheitsbezogenen eingeschränkten Bereichs mit zunehmender Geschwindigkeit des Fahrzeugs (100) zunimmt.

6. Fahrzeuganzeigevorrichtung (251) nach einem der Ansprüche 1 bis 5, wobei die Steuerung (170) dazu eingerichtet ist:
einen privatsphärenbezogenen eingeschränkten Bereich des Anzeigepanels (810) auf Grundlage einer privatsphärenbezogenen Bedingung zu bestimmen, die sich auf eine private Angelegenheit bezieht, und
die Vielzahl erster Lichtquellen (921) und die Vielzahl zweiter Lichtquellen (951') so zu steuern, dass ein Betrachtungswinkel des privatsphärenbezogenen eingeschränkten Bereichs geändert wird.

7. Fahrzeuganzeigevorrichtung (251) nach Anspruch 6, wobei die Steuerung (170) dazu eingerichtet ist:
die Lichtemission der zweiten Lichtquelle (951') auszusetzen, sodass in dem privatsphärenbezogenen eingeschränkten Bereich der Betrachtungswinkel für einen beifahrerbezogenen eingeschränkten Bereich, der sich auf eine private Angelegenheit eines Beifahrersitzes bezieht, geändert wird, und
die Lichtemission der ersten Lichtquelle (921) auszusetzen, sodass in dem privatsphärenbezogenen eingeschränkten Bereich der Betrachtungswinkel für einen fahrerbezogenen eingeschränkten Bereich, der sich auf eine private Angelegenheit des Fahrersitzes bezieht, geändert wird.

8. Fahrzeuganzeigevorrichtung (251) nach Anspruch 7, wobei die Steuerung (170) dazu eingerichtet ist:
einen Bereich des Anzeigepanels (810), in dem ein dem Beifahrersitz entsprechender erster Inhalt ausgegeben wird, als den beifahrerbezogenen eingeschränkten Bereich zu bestimmen, basierend darauf, dass der erste Inhalt in der privatsphärenbezogenen Bedingung ausgegeben wird, und
einen Bereich des Anzeigepanels (810), in dem ein dem Fahrersitz entsprechender zweiter Inhalt ausgegeben wird, als den fahrerbezogenen eingeschränkten Bereich zu bestimmen, basierend darauf, dass der zweite Inhalt in der privatsphärenbezogenen Bedingung ausgegeben wird.

9. Fahrzeuganzeigevorrichtung (251) nach Anspruch 8, wobei die Steuerung (170) dazu eingerichtet ist, die Bestimmung, ob der erste Inhalt in der privatsphärenbezogenen Bedingung ausgegeben wird, basierend darauf auszusetzen, dass der Blick eines auf dem Fahrersitz befindlichen Benutzers nach vorn gerichtet ist.

10. Fahrzeuganzeigevorrichtung (251) nach einem der Ansprüche 6 bis 9, wobei die Steuerung (170) dazu eingerichtet ist:
eine Bestimmung bezüglich der privatsphärenbezogenen Bedingung basierend darauf durchzuführen, dass sich ein Benutzer auf dem Beifahrersitz befindet, und
eine Bestimmung bezüglich der privatsphärenbezogenen Bedingung basierend darauf auszusetzen, dass sich der Benutzer nicht auf dem Beifahrersitz befindet.

## Revendications

1. Dispositif d'affichage de véhicule (251), comprenant :
un panneau d'affichage (810) comprenant une couche de cristaux liquides ;
une unité de rétroéclairage (850) empilée avec le panneau d'affichage (810) suivant une première direction et configurée pour émettre de la lumière vers le panneau d'affichage (810) ; et
un contrôleur (170),
dans lequel l'unité de rétroéclairage (850) comprend :
une première plaque guide de lumière (910) ;
une pluralité de premières sources lumineuses (921) disposées suivant une troisième direction perpendiculaire à la fois à la première direction et à une deuxième direction, et configurées pour émettre de la lumière vers la première plaque guide de lumière (910) suivant la deuxième direction perpendiculaire à la première direction ;
une deuxième plaque guide de lumière (940') disposée à proximité du panneau d'affichage (810) ;
une pluralité de deuxièmes sources lumineuses (951') disposées suivant la troisième direction et configurées pour émettre de la lumière vers la deuxième plaque guide de lumière (940') suivant la deuxième direction ; et
un film de réglage de la lumière (930) comprenant une pluralité de motifs d'absorption (931) disposés suivant la troisième direction et constitués d'un matériau absorbant la lumière, et disposé entre la première plaque guide de lumière (910) et la deuxième plaque guide de lumière (940'),
dans lequel la pluralité de motifs d'absorption (931) est formée de manière à s'étendre le long de la deuxième direction tout en présentant une hauteur prédéterminée suivant la première direction,
dans lequel la deuxième plaque guide de lumière (940') comprend une pluralité de motifs de réflexion (942'), chacun étant formé selon une forme prédéterminée de sorte que la lumière émise par les deuxièmes sources lumineuses (951') et réfléchie soit dirigée vers un siège conducteur, et
dans lequel le contrôleur (170) est configuré pour :
lors de la limitation, pour le siège conducteur, d'un angle de vision de certaines régions parmi la pluralité de zones constituant le panneau d'affichage (810), suspendre l'émission de lumière provenant de certaines de la pluralité de deuxièmes sources lumineuses (951') correspondant auxdites certaines régions, et
lors de la limitation, pour un siège passager, d'un angle de vision desdites certaines régions, suspendre l'émission de lumière provenant de certaines de la pluralité de premières sources lumineuses (921) correspondant auxdites certaines régions.

2. Dispositif d'affichage de véhicule (251) selon la revendication 1, dans lequel le contrôleur (170) est configuré pour :
déterminer une région restreinte liée à la sécurité du panneau d'affichage (810) sur la base d'une première condition liée à la conduite d'un véhicule (100),
commander la pluralité de premières sources lumineuses (921) et la pluralité de deuxièmes sources lumineuses (951') de sorte qu'un angle de vision de la région restreinte liée à la sécurité soit modifié.

3. Dispositif d'affichage de véhicule (251) selon la revendication 2, dans lequel le contrôleur (170) est configuré pour :
déterminer la région restreinte liée à la sécurité dans une région restante du panneau d'affichage (810), à l'exclusion d'une région dans laquelle un contenu prédéterminé lié à la conduite du véhicule (100) est affiché, sur la base du fait que le contenu prédéterminé est affiché dans la condition liée à la sécurité, et
suspendre l'émission de lumière provenant de certaines de la pluralité de deuxièmes sources lumineuses (951') correspondant à la région restreinte liée à la sécurité, de sorte que l'angle de vision de la région restreinte liée à la sécurité pour le siège conducteur soit restreint.

4. Dispositif d'affichage de véhicule (251) selon la revendication 2 ou 3, dans lequel le contrôleur (170) est configuré pour suspendre une détermination relative à la condition liée à la sécurité sur la base du fait que le regard d'un utilisateur se trouvant sur le siège conducteur est dirigé vers l'avant.

5. Dispositif d'affichage de véhicule (251) selon l'une quelconque des revendications 2 à 4, dans lequel le contrôleur (170) est configuré pour :
déterminer une région du panneau d'affichage (810) adjacente au siège passager en tant que région restreinte liée à la sécurité, sur la base du fait qu'une vitesse du véhicule (100) est supérieure ou égale à une limite de vitesse prédéfinie dans la condition liée à la sécurité,
suspendre l'émission de lumière provenant de certaines de la pluralité de deuxièmes sources lumineuses (951') correspondant à la région restreinte liée à la sécurité, de sorte que l'angle de vision de la région restreinte liée à la sécurité pour le siège conducteur soit restreint, et
dans lequel la superficie de la région restreinte liée à la sécurité augmente à mesure que la vitesse du véhicule (100) augmente.

6. Dispositif d'affichage de véhicule (251) selon l'une quelconque des revendications 1 à 5, dans lequel le contrôleur (170) est configuré pour :
déterminer une région restreinte liée à la confidentialité du panneau d'affichage (810) sur la base d'une condition liée à la confidentialité se rapportant à une affaire privée, et
commander la pluralité de premières sources lumineuses (921) et la pluralité de deuxièmes sources lumineuses (951') de sorte qu'un angle de vision de la région restreinte liée à la confidentialité soit modifié.

7. Dispositif d'affichage de véhicule (251) selon la revendication 6, dans lequel le contrôleur (170) est configuré pour :
suspendre l'émission de lumière de la deuxième source lumineuse (951'), de sorte que, dans la région restreinte liée à la confidentialité, l'angle de vision d'une région restreinte liée au passager et se rapportant à une affaire privée d'un siège passager soit modifié, et
suspendre l'émission de lumière de la première source lumineuse (921), de sorte que, dans la région restreinte liée à la confidentialité, l'angle de vision d'une région restreinte liée au conducteur et se rapportant à une affaire privée du siège conducteur soit modifié.

8. Dispositif d'affichage de véhicule (251) selon la revendication 7, dans lequel le contrôleur (170) est configuré pour :
déterminer une région du panneau d'affichage (810), dans laquelle un premier contenu correspondant au siège passager est affiché, en tant que région restreinte liée au passager, sur la base du fait que le premier contenu est affiché dans la condition liée à la confidentialité, et
déterminer une région du panneau d'affichage (810), dans laquelle un deuxième contenu correspondant au siège conducteur est affiché, en tant que région restreinte liée au conducteur, sur la base du fait que le deuxième contenu est affiché dans la condition liée à la confidentialité.

9. Dispositif d'affichage de véhicule (251) selon la revendication 8, dans lequel le contrôleur (170) est configuré pour suspendre la détermination de la question de savoir si le premier contenu est affiché dans la condition liée à la confidentialité, sur la base du fait que le regard d'un utilisateur se trouvant sur le siège conducteur est dirigé vers l'avant.

10. Dispositif d'affichage de véhicule (251) selon l'une quelconque des revendications 6 à 9, dans lequel le contrôleur (170) est configuré pour :
effectuer une détermination relative à la condition liée à la confidentialité sur la base du fait qu'un utilisateur se trouve sur le siège passager, et
suspendre une détermination relative à la condition liée à la confidentialité sur la base du fait que l'utilisateur ne se trouve pas sur le siège passager.
